# EUROPEAN PATENT SPECIFICATION

(11) **EP 3 396 578 B1**
(45) Date of publication and mention of the grant of the patent: **31.07.2019**
(21) Application number: 18169143.7
(22) Date of filing: 25.04.2018
(51) Int. Cl.: G06F 21/31, G06F 21/62, H04L 29/06, G06F 16/182, G06F 16/176

(54) **SHARED TERMINAL, COMMUNICATION METHOD, AND CARRIER MEANS**
GEMEINSAM GENUTZTES ENDGERÄT, KOMMUNIKATIONSVERFAHREN UND TRÄGERMITTEL
TERMINAL PARTAGÉ, PROCÉDÉ DE COMMUNICATION ET MOYENS DE SUPPORT

(30) Priority: 25.04.2017 JP 2017086214; 13.04.2018 JP 2018077642
(43) Date of publication of application: 31.10.2018
(73) Proprietor: Ricoh Company Ltd., Ohta-ku Tokyo 143-8555 (JP)
(72) Inventor: KATO, Yoshinaga, Tokyo 143-8555 (JP)
(74) Representative: SSM Sandmair

(56) References cited:
- US-A1- 2010 082 681
- US-A1- 2014 282 991

## Description

### BACKGROUND

### Technical Field

The present invention relates to a shared terminal, a communication method, and carrier means.

### Description of the Related Art

Recently, electronic whiteboards that can be shared by a plurality of users are disposed in various types of places such as meeting rooms in companies or classrooms in educational institutions. The electronic whiteboard is provided with a touch panel display of large size, which displays a drawing image drawn by each user with a dedicated electronic pen or his or her finger. This enables the users to conduct a meeting or a class while viewing the same drawing image drawn by each user (see JP-2001-292266-A).

Further, after the meeting or class, a person who has a legitimate user authority (access authority) is able to save or read out file data (electronic file data) of the drawing image or the like. This ensures security.

On the other hand, a meeting or class sometimes ends halfway with only a part of contents being discussed or presented during the time allocated. The rest of contents is sometimes carried over to the next meeting or class. In this case, the file data of drawing image or the like that is stored during the meeting or class that ended halfway is loaded to the electronic whiteboard at the next meeting to continue discussion or lecture.

However, there is a case where a person other than a chairperson of the previous meeting or a teacher of the previous class continues the next meeting or class. In other words, a person who uses the stored file data of drawing image or the like in the next meeting is not limited to the chairperson of the previous meeting or the teacher of the previous class. Therefore, when attempting to ensure security as described above, it may be difficult to have the other person take over the meetings or class smoothly.

US 2010/082681 A1 is further prior art.

### SUMMARY

The present invention is defined by the independent claims 1, 9, 10, and 11. In the following, aspects useful for understanding the invention are provided.

In one aspect of the present invention, a shared terminal (2) for displaying an image to a plurality of users on a display (220), the shared terminal (2) includes obtaining means (28, 201, 219, 219a) for obtaining, from a first terminal (3, 4) of a first user, first terminal identification information for identifying the first terminal (3, 4), transmitting means (21, 201, 205) for transmitting the first terminal identification information to a terminal management server (5), the terminal management server (5) storing, for each of the plurality of users, information relating to a terminal (3, 4) of the user, and receiving means (21, 201, 205) for receiving first user identification information for identifying the first user, the first user identification information being transmitted from the terminal management server (5) based on transmission of the first terminal identification information by the transmitting means (21, 201, 205). The transmitting means (21, 201, 205) transmits the first user identification information to a file management server (8), the file management server (8) storing information relating to one or more folders accessible by one or more users of the plurality of users. The receiving means (21, 201, 205) receives a first private folder name of a first private folder accessible only by the first user and a first shared folder name of a first shared folder accessible by the first user and at least one other user, the first private folder name and the first shared folder name being transmitted from the file management server (8) based on transmission of the first user identification information by the transmitting means (21, 201, 205). The shared terminal (2) further comprises display control means (24, 213) for controlling the display (220) to display the first private folder name and the first shared folder name to enable a selection of a destination to which electronic file data is to be stored.

According to an aspect of the present invention, a first private folder name and a first shared folder name are displayed to be selected. The use of the first shared folder enables a user to smoothly continue a meeting or a class that ended halfway even when the user differs from the previous user who has previously used the shared terminal. On the other hand, the use of the first private folder enables the user to ensure security as access from the other user is prohibited.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a schematic diagram illustrating a communication system according to an embodiment of the present invention;
FIG. 2 is a schematic block diagram illustrating a hardware configuration of an electronic whiteboard, according to an embodiment of the present invention;
FIG. 3 is a schematic block diagram illustrating a hardware configuration of an integrated circuit (IC) card, according to an embodiment of the present invention;
FIG. 4 is a schematic block diagram illustrating a hardware configuration of a smartphone, according to an embodiment of the present invention;
FIG. 5 is a schematic block diagram illustrating a hardware configuration of a sever or a personal computer (PC), according to an embodiment of the present invention;
FIG. 6 is a schematic block diagram illustrating a hardware configuration of a multifunctional peripheral, product or printer (MFP), according to an embodiment of the present invention;
FIG. 7 is a schematic block diagram illustrating a hardware configuration of a videoconference terminal, according to an embodiment of the present invention;
FIGs. 8A, 8B, and 8C each illustrates an example screen displayed by a display at the electronic whiteboard, according to an embodiment of the present invention;
FIGs. 9A and 9B are a schematic block diagram illustrating a functional configuration of the communication system, according to an embodiment of the present invention;
FIG. 10A is a conceptual diagram illustrating a terminal management table, according to an embodiment of the present invention;
FIG. 10B is a conceptual diagram illustrating a folder management table, according to an embodiment of the present invention;
FIG. 11 is a sequence diagram illustrating a login process, according to an embodiment of the present invention;
FIGs. 12A, 12B and 12C each illustrates an example screen displayed by the display at the electronic whiteboard, according to an embodiment of the present invention;
FIG. 13 is an illustration for explaining a use scenario of the electronic whiteboard, according to an embodiment of the present invention;
FIG. 14 is a flowchart illustrating a process according to an authentication result when logging in, according to an embodiment of the present invention;
FIG. 15 is a sequence diagram illustrating an operation of reading out file data according to the embodiment of the present invention;
FIG. 16 is a flowchart illustrating an operation of selecting a folder from which file data is to be read, according to an embodiment of the present invention;
FIGs. 17A, 17B, and 17C each illustrates an example screen displayed on the display at the electronic whiteboard, when an operation of reading out file data is performed, according to an embodiment of the present invention;
FIG. 18 is a sequence diagram illustrating an operation of storing file data, according to an embodiment of the present invention;
FIG. 19 is a flowchart illustrating an operation of selecting a folder in which file data is to be stored, according to an embodiment of the present invention, and
FIGs. 20A, 20B and 20C each illustrates an example screen displayed by the display at the electronic whiteboard, when an operation of saving file data is performed, according to an embodiment of the present invention;
FIG. 21 illustrates an example data structure of page data, according to an embodiment of the present invention;
FIG. 22 illustrates an example data structure of stroke arrangement data, according to an embodiment of the present invention;
FIG. 23 illustrates an example data structure of coordinate arrangement data, according to an embodiment of the present invention, and
FIG. 24 illustrates an example data structure of medium data, according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the multiple forms as well, unless the context clearly indicates otherwise.

Referring to the drawings, a communication system 1 is described in detail according to an embodiment. In the present embodiment, a term "folder" refers to an "electronic folder", and a term "file" refers to an "electronic file".

### <Overview of System Configuration>

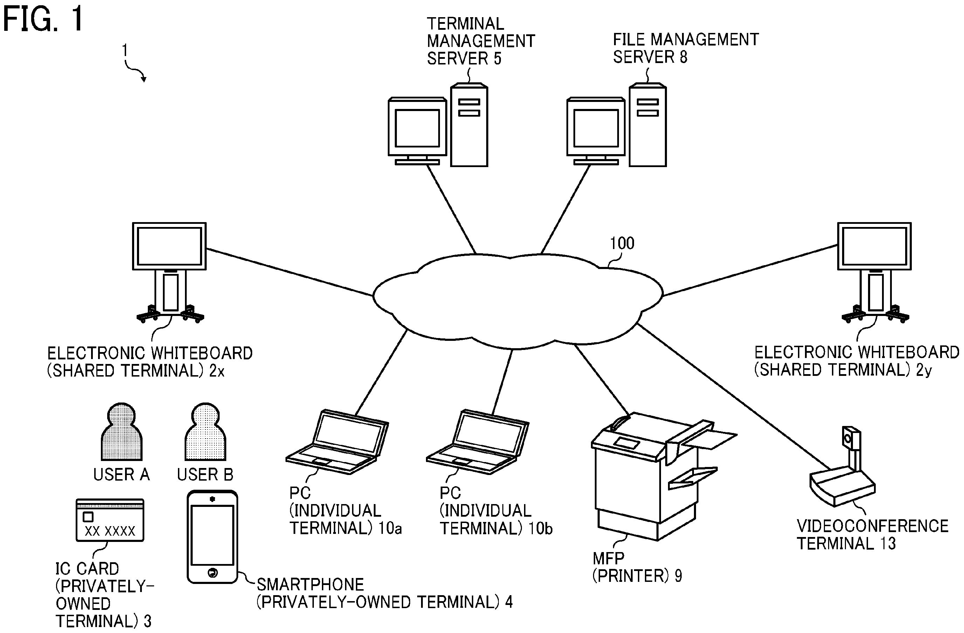

First, an overview of a configuration of the communication system 1 is described according to an embodiment. FIG. 1 is a schematic diagram illustrating a configuration of the communication system 1 according to the embodiment.

As illustrated in FIG. 1, the communication system 1 of the embodiment includes an electronic whiteboard 2x, an electronic whiteboard 2y, an integrated circuit (IC) card 3, a smartphone 4, a terminal management server 5, a file management server 8, a multifunction peripheral, product or printer (MFP) 9, personal computers (PCs) 10a and 10b, and a videoconference terminal 13. For simplicity, in the following, any arbitrary one of the electronic whiteboards 2x and 2y is referred to as the "electronic whiteboard 2". Any arbitrary one of the PCs 10a and 10b is referred to as the "PC 10". A management system is configured by the terminal management server 5 and the file management server 8.

The electronic whiteboard 2, the terminal management server 5, the file management server 8, the MFP 9, the PC 10, and the videoconference terminal 13 of the communication system 1 are communicable with one another through a communication network 100. The communication network 100 is implemented by the Internet, mobile communication network, local area network (LAN), etc. The communication network 100 may include, in addition to a wired network, a wireless network in compliance with such as 3rd Generation (3G), Worldwide Interoperability for Microwave Access (WiMAX), Long Term Evolution (LTE), etc. The electronic whiteboard 2, IC card 3, and smartphone 4 are communicable with one another using a near-distance communication technology in compliance with such as Near Field Communication (NFC) (Registered Trademark). The smartphone 4 may communicate with the electronic whiteboard 2 using the near-distance communication technology in compliance with such as Bluetooth (Registered Trademark).

One of the electronic whiteboard 2x and the electronic whiteboard 2y transmits or receives drawing image data representing a content drawn by a user ("drawing image data"), to or from the other one of the electronic whiteboard 2x and the electronic whiteboard 2y. That is, the content drawn at the electronic whiteboard 2x is displayed at the electronic whiteboard 2y, and the content drawn at the electronic whiteboard 2y is displayed at the electronic whiteboard 2x.

The electronic whiteboard 2 generates image data in Refined Printing Command Stream (RPCS) based on the drawing image data, and transmits the generated image data to the MFP 9 through the communication network 100. In another example, the electronic whiteboard 2 generates image data in Portable Document Format (PDF) based on the drawing image data, and transmits an electronic mail attached with the generated image data to the PC 10 through the communication network 100. The MFP 9 prints an image based on the drawing image data received from the electronic whiteboard 2. The PC 10 displays an image based on the drawing image data extracted from the electronic mail.

The electronic whiteboard 2 may display an image other than the drawing image drawn by the user ("non-drawing image"), such as an image of a presentation material. The electronic whiteboard 2 generates image data in RPCS based on non-drawing image data, and transmits the generated image data to the MFP 9 through the communication network 100. In another example, the electronic whiteboard 2 generates image data in PDF based on the non-drawing image data, and transmits an electronic mail attached with the generated image data to the PC 10 through the communication network 100.

In this disclosure, the image data in RPCS and the image data in PDF each represent a content of a drawing image drawn by a user, or a non-drawing image displayed by a user, for example. The electronic whiteboard 2 is an example of a shared terminal to be shared by a plurality of users. The plurality of users are able to view a same image simultaneously. The IC card 3 and the smartphone 4 are an example of a privately-owned terminal, privately owned by each user. The MFP 9 is an example of a printer. The PC 10 is an example of an individual terminal operated by an individual user. The image data may be in any suitable format other than RPCS, such as in Printer Control Language (PCL), Page Description Language (PDL), and Post Script (PS).

In FIG. 1, the user A, who owns the IC card 3, brings the IC card 3 to a meeting being held with the electronic whiteboard 2. The user B, who owns the smartphone 4, brings the smartphone 4 to the meeting being held with the electronic whiteboard 2. The PC 10a is any PC owned by the user A. The PC 10b is any PC owned by the user B. In one example, the electronic whiteboard 2 may have a videoconference capability, to carry out a videoconference with the videoconference terminal 13 by communicating video data and audio data through the communication network 100.

The terminal management server 5 manages, for each privately-owned terminal, terminal identification (ID) identifying the privately-owned terminal. The file management server 8 manages file data of each user.

### <Hardware Configuration>

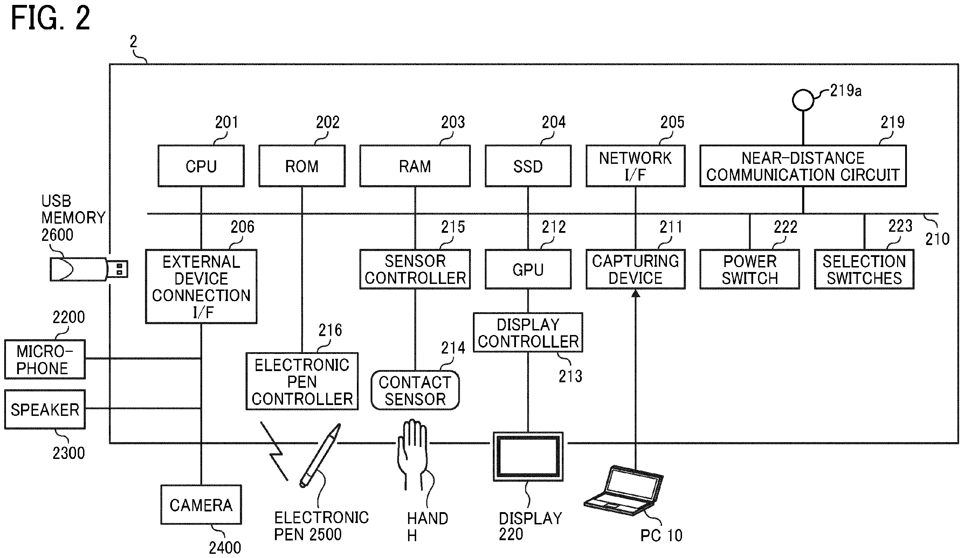

Referring to FIGs. 2 to 7, a hardware configuration of the apparatus or terminal in the communication system 1 is described according to the embodiment.

### <Hardware Configuration of Electronic Whiteboard>

FIG. 2 is a diagram illustrating a hardware configuration of the electronic whiteboard 2, according to the embodiment. As illustrated in FIG. 2, the electronic whiteboard 2 includes a central processing unit (CPU) 201, a read only memory (ROM) 202, a random access memory (RAM) 203, a solid state drive (SSD) 204, a network interface (I/F) 205, and an external device connection interface (I/F) 206.

The CPU 201 controls entire operation of the electronic whiteboard 2. The ROM 202 stores a control program for controlling the CPU 201 such as an Initial Program Loader (IPL). The RAM 203 is used as a work area for the CPU 201. The SSD 204 stores various data such as the control program for the electronic whiteboard 2. The network I/F 205 controls communication with an external device through the communication network 100. The external device connection I/F 206 controls communication with a universal serial bus (USB) memory 2600, and external devices such as a camera 2400, a speaker 2300, a microphone 2200, etc.

The electronic whiteboard 2 further includes a capturing device 211, a graphics processing unit (GPU) 212, a display controller 213, a contact sensor 214, a sensor controller 215, an electronic pen controller 216, a near-distance communication circuit 219, an antenna 219a for the near-distance communication circuit 219, a power switch 222, and selection switches 223.

The capturing device 211 causes a display 508 of the PC 10 to display a still image or a video image based on image data. The GPU 212 is a semiconductor chip dedicated to processing a graphical image. The display controller 213 controls display of an image processed at the GPU 212 for output through the display 220 provided with the electronic whiteboard 2. The contact sensor 214 detects a touch onto the display 220 with an electronic pen 2500 or a user's hand H. The sensor controller 215 controls operation of the contact sensor 214. The contact sensor 214 senses a touch input to a specific coordinate on the display 220 using the infrared blocking system. More specifically, the display 220 is provided with two light receiving elements disposed on both upper side ends of the display 220, and a reflector frame surrounding the sides of the display 220. The light receiving elements emit a plurality of infrared rays in parallel to a surface of the display 220. The light receiving elements receive lights passing in the direction that is the same as an optical path of the emitted infrared rays, which are reflected by the reflector frame. The contact sensor 214 outputs an identifier (ID) of the infrared ray that is blocked by an object after being emitted from the two light receiving elements, to the sensor controller 215. Based on the ID of the infrared ray, the sensor controller 215 detects a specific coordinate that is touched by the object. The electronic pen controller 216 communicates with the electronic pen 2500 to detect a touch by the tip or bottom of the pen 2500 to the display 220. The near-distance communication circuit 219 is a communication circuit that communicates in compliance with the NFC, the Bluetooth, and the like. The power switch 222 is a switch that turns on or off the power of the electronic whiteboard 2. The selection switches 223 are a group of switches for adjusting brightness, hue, etc., of display on the display 220, for example.

The electronic whiteboard 2 further includes a bus line 210. The bus line 210 is an address bus or a data bus, which electrically connects the elements in FIG. 2 such as the CPU 201.

The contact sensor 214 is not limited to the infrared blocking system type, and may be a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display. In addition or in alternative to detecting a touch by the tip or bottom of the electronic pen 2500, the electronic pen controller 216 may also detect a touch by another part of the electronic pen 2500, such as a part held by a hand of the user.

### <Hardware Configuration of IC Card>

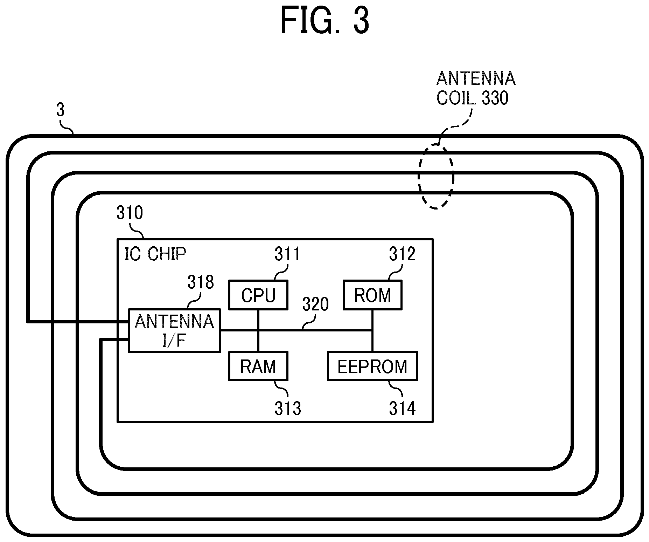

FIG. 3 is a diagram illustrating a hardware configuration of the IC card 3 according to the embodiment. In this disclosure, the contactless IC card is described, but contact IC card may be applied instead. As illustrated in FIG. 3, the IC card 3 includes an IC chip 310 and an antenna coil 330. The IC chip 310 further includes a CPU 311, a ROM 312, a RAM 313, an Electrically Erasable and Programmable ROM (EEPROM) 314, and an antenna I/F 318.

The CPU 311 controls entire operation of the IC card 3. The ROM 312 stores a control program for controlling the CPU 311. The RAM 313 is used as a work area for the CPU 311. The EEPROM 314 stores various data such as the control program for the IC card 3, and a terminal ID for identifying the IC card 3, and the like. The antenna I/F 318 controls transmission or reception of data with an external device via the antenna coil 330.

The IC card 3 further includes a bus line 320. The bus line 320 is an address bus or a data bus, which electrically connects the elements in FIG. 3 such as the CPU 311.

The antenna coil 330 generates an electric current, which is induced as the IC card 3 passes an electromagnetic field generated by radio waves emitted from an external device such as a reader and writer. The IC card 3 uses the generated electric current to activate the IC chip 310, and communicates with the external device, that is the reader and writer, to obtain or provide data with the external device.

### <Hardware Configuration of Smartphone>

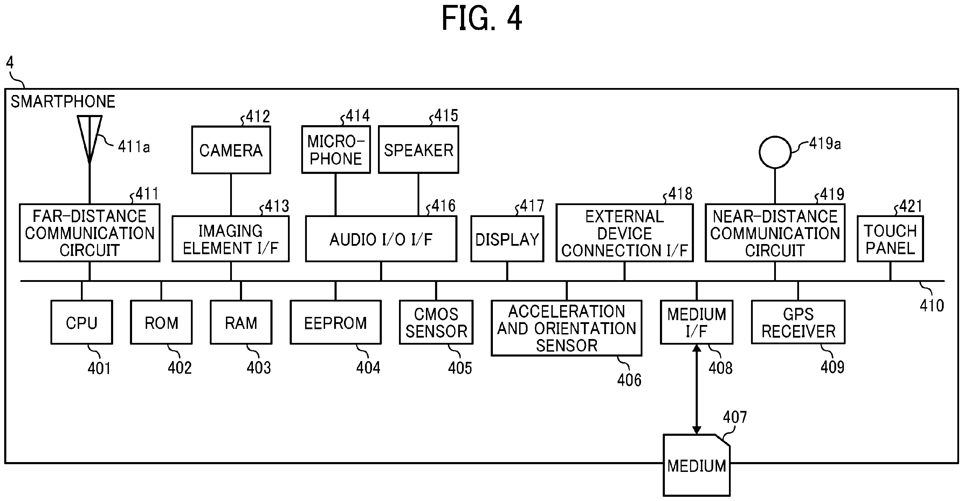

FIG. 4 is a diagram illustrating a hardware configuration of the smartphone 4 according to the embodiment. As illustrated in FIG. 4, the smartphone 4 includes a CPU 401, a ROM 402, a RAM 403, an EEPROM 404, a Complementary Metal Oxide Semiconductor (CMOS) sensor 405, an acceleration and orientation sensor 406, a medium I/F 408, and a global positioning system (GPS) receiver 409.

The CPU 401 controls entire operation of the smartphone 4. The ROM 402 stores a control program for controlling the CPU 401 such as an IPL. The RAM 403 is used as a work area for the CPU 401. The EEPROM 404 reads or writes various data such as a control program for the smartphone 4 under control of the CPU 401. The CMOS sensor 405 captures an object (mainly, the user operating the smartphone 4) under control of the CPU 401 to obtain captured image data. The acceleration and orientation sensor 406 includes various sensors such as an electromagnetic compass or gyrocompass for detecting geomagnetism, and an acceleration sensor. The medium I/F 408 controls reading or writing of data with respect to a storage medium 407 such as a flash memory. The GPS receiver 409 receives a GPS signal from a GPS satellite.

The smartphone 4 further includes a far-distance communication circuit 411, a camera 412, an imaging element I/F 413, a microphone 414, a speaker 415, an audio input/output I/F 416, a display 417, an external device connection I/F 418, a near-distance communication circuit 419, an antenna 419a for the near-distance communication circuit 419, and a touch panel 421.

The far-distance communication circuit 411 is a circuit that communicates with other device through the communication network 100. The camera 412 is an example of built-in imaging device capable of capturing a subject to obtain image data under control of the CPU 401. The imaging element I/F 413 is a circuit that controls driving of the camera 412. The microphone 414 is an example of built-in audio capturing device capable of inputting audio under control of the CPU 401. The audio input/output I/F 416 is a circuit for inputting or outputting an audio signal between the microphone 414 and the speaker 415 under control of the CPU 401. The display 417 is an example of a display device, such as a liquid crystal display and an organic electroluminescence (EL) display, which displays an image of a subject, various icons, or the like. The external device connection I/F 418 is an interface circuit that connects the smartphone 4 to various external devices. The near-distance communication circuit 419 is a communication circuit that communicates in compliance with the NFC, the Bluetooth, and the like. The touch panel 421 is an example of input device that enables the user to input a user instruction to the smartphone 4 through touching a screen of the display 417.

The smartphone 4 further includes a bus line 410. The bus line 410 is an address bus or a data bus, which electrically connects the elements in FIG. 4 such as the CPU 401.

### <Hardware Configuration of Server and PC>

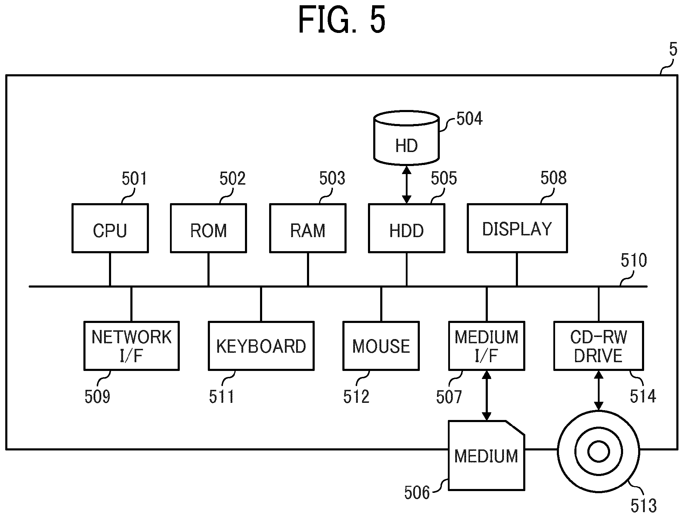

FIG. 5 is a diagram illustrating a hardware configuration of any one of the terminal management server 5, the file management server 8, and the PC 10, according to the embodiment. In this disclosure, since the terminal management server 5, the file management server 8, the PC 10a, and the PC 10b have substantially the same hardware structure, a hardware configuration of the terminal management server 5 is described below as an example. In the following description, even in case of describing the hardware configuration of the file management server 8, the PC 10a, and the PC 10b, the elements in FIG. 5 are referred.

As illustrated in FIG. 5, the terminal management server 5, which may be implemented by a computer, includes a CPU 501, a ROM 502, a RAM 503, a hard disk (HD) 504, a hard disk drive (HDD) 505, a storage medium 506, a medium I/F 507, a display 508, a network I/F 509, a keyboard 511, a mouse 512, a compact disc rewritable (CD-RW) drive 514, and a bus line 510.

The CPU 501 controls entire operation of the terminal management server 5. The ROM 502 stores a control program for controlling the CPU 501 such as an IPL. The RAM 503 is used as a work area for the CPU 501. The HD 504 stores various data such as a control program. The HDD 505 controls reading or writing of various data to or from the HD 504 under control of the CPU 501. The medium I/F 507 controls reading or writing of data with respect to the storage medium 506 such as a flash memory. The display 508 displays various information such as a cursor, menu, window, characters, or image. The network I/F 509 is an interface that controls communication of data with an external device through the communication network 100. The keyboard 511 is one example of input device provided with a plurality of keys for allowing a user to input characters, numerals, or various instructions. The mouse 512 is one example of input device for allowing the user to select a specific instruction or execution, select a target for processing, or move a cursor being displayed. The CD-RW drive 514 reads or writes various data with respect to a removable recording medium 513, such as a CD-RW or compact disc read only memory (CD-ROM).

The terminal management server 5 further includes a bus line 510. The bus line 510 may be an address bus or a data bus, which electrically connects various elements such as the CPU 501 of FIG. 5.

### <Hardware Configuration of MFP>

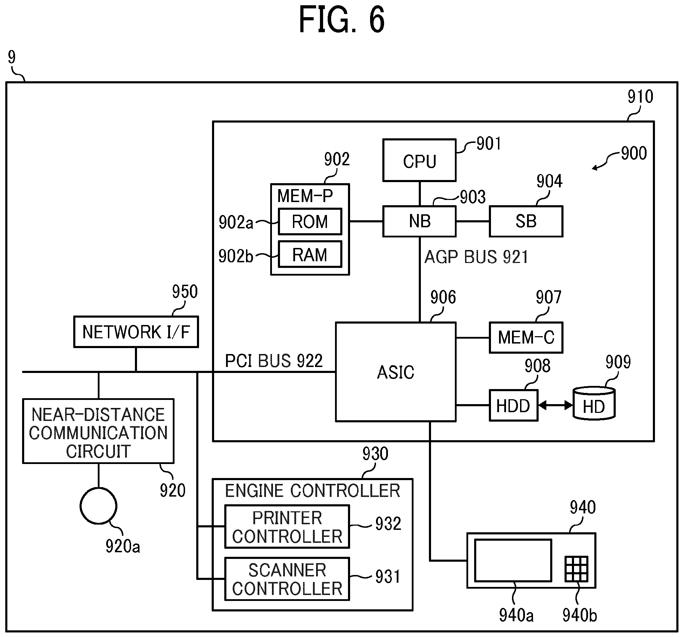

FIG. 6 is a diagram illustrating a hardware configuration of the MFP 9, according to the embodiment. As illustrated in FIG. 6, the MFP 9 includes a controller 910, a near-distance communication circuit 920, an engine controller 930, a control panel 940, and a network I/F 950.

The controller 910 includes a CPU 901 as a main processor, a system memory (MEM-P) 902, a north bridge (NB) 903, a south bridge (SB) 904, an Application Specific Integrated Circuit (ASIC) 906, a local memory (MEM-C) 907, an HDD 908, and an HD 909 as a storage unit. The NB 903 and the ASIC 906 are connected through an Accelerated Graphics Port (AGP) bus 921.

The CPU 901 controls entire operation of the MFP 9. The NB 903 connects the CPU 901, with the MEM-P 902, SB 904, and AGP bus 921. The NB 903 includes a memory controller for controlling reading or writing of various data with respect to the MEM-P 902, a Peripheral Component Interconnect (PCI) master, and an AGP target.

The MEM-P 902 includes a ROM 902a as a memory that stores program and data for implementing various functions of the controller 910. The MEM-P 902 further includes a RAM 902b as a memory that deploys the program and data, or as a drawing memory that stores drawing data for printing. The program stored in the RAM 902b may be stored in any computer-readable storage medium, such as a CD-ROM, floppy disk (FD), compact disc-recordable (CD-R), or digital versatile disc (DVD), in a file format installable or executable by the computer, for distribution.

The SB 904 connects the NB 903 with a PCI device or a peripheral device. The ASIC 906 is an integrated circuit (IC) dedicated to an image processing use, and connects the AGP bus 921, a PCI bus 922, the HDD 908, and the MEM-C 907. The ASIC 906 includes a PCI target, an AGP master, an arbiter (ARB) as a central processor of the ASIC 906, a memory controller for controlling the MEM-C 907, a plurality of direct memory access controllers (DMACs) capable of converting coordinates of image data with a hardware logic, and a PCI unit that transfers data between a scanner controller 931 and a printer controller 932 through the PCI bus 922. The ASIC 906 may be connected to a USB interface, or the Institute of Electrical and Electronics Engineers 1394 (IEEE1394) interface.

The MEM-C 907 is a local memory, which is used as a buffer for image data to be copied or code image. The HD 909 stores various image data, font data for printing, and form data. The HDD 908 reads or writes various data from or to the HD 909 under control of the CPU 901. The AGP bus 921 is a bus interface for a graphics accelerator card, which has been proposed to accelerate graphics processing. Through directly accessing the MEM-P 902 by high-throughput, the graphics accelerator card is accelerated.

The near-distance communication circuit 920 is provided with an antenna 920a. The near-distance communication circuit 920 is a communication circuit that communicates in compliance with the NFC, the Bluetooth, and the like.

The engine controller 930 includes the scanner controller 931 and the printer controller 932. The control panel 940 includes a panel display 940a and various keys 940b. The panel display 940a is implemented by, for example, a touch panel that displays current settings or a selection screen, and receives a user input. The keys 940b, which include a numeric keypad that receives set values of various image forming parameters such as image density parameter, and a start key that accepts an instruction for starting copying. The controller 910 controls entire operation of the MFP 9. In example operation, the controller 910 controls drawing, communication, or user inputs to the control panel 940. The scanner controller 931 and the printer controller 932 each performs various image processing, such as error diffusion or gamma conversion.

In response to an instruction to select a specific application through the control panel 940, for example, using a mode switch key, the MFP 9 selectively performs a document box function, a copy function, a print function, and a facsimile function. When the document box function is selected, the MFP 9 changes its operating mode to a document box mode to store document data. With selection of the copy function, the MFP 9 operates in a copy mode. With selection of the print function, the MFP 9 operates in a printer mode. With selection of the facsimile function, the MFP 9 operates in a facsimile mode.

The network I/F 950 controls communication of data with an external device through the communication network 100. The near-distance communication circuit 920 and the network I/F 950 are electrically connected to the ASIC 906 via the PCI bus 922.

### <Hardware Configuration of Videoconference Terminal>

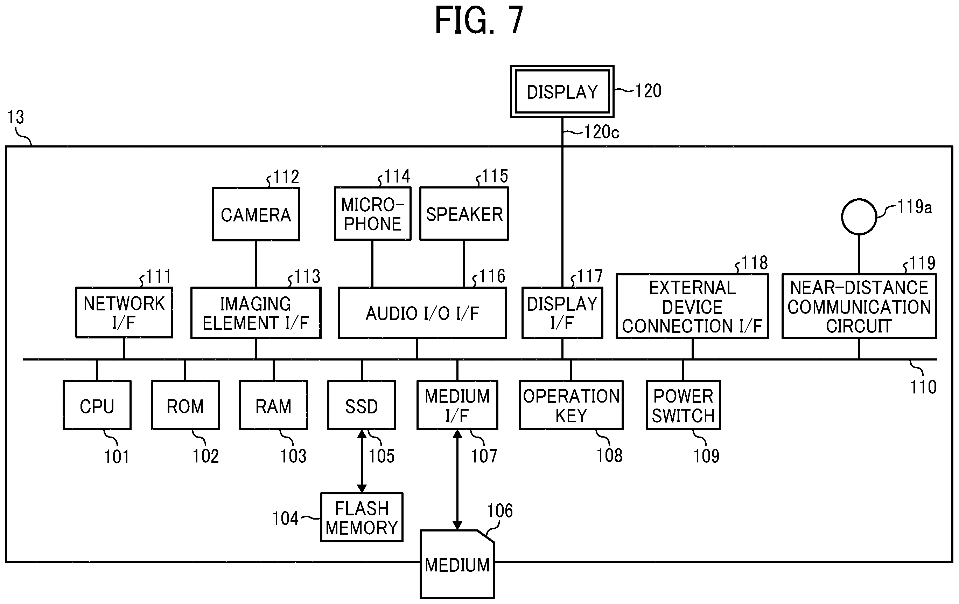

FIG. 7 is a diagram illustrating a hardware configuration of the videoconference terminal 13 according to the embodiment. As illustrated in FIG. 7, the videoconference terminal 13 includes a CPU 101, a ROM 102, a RAM 103, a flash memory 104, an SSD 105, a medium I/F 107, an operation key 108, a power switch 109, a bus line 110, a network I/F 111, a camera 112, an imaging element I/F 113, a microphone 114, a speaker 115, an audio input/output I/F 116, a display I/F 117, an external device connection I/F 118, a near-distance communication circuit 119, and an antenna 119a for the near-distance communication circuit 119. The CPU 101 controls entire operation of the videoconference terminal 13. The ROM 102 stores a control program for controlling the CPU 101 such as an IPL. The RAM 103 is used as a work area for the CPU 101. The flash memory 104 stores various data such as a communication control program, image data, and audio data. The SSD 105 controls reading or writing of various data to or from the flash memory 104 under control of the CPU 101. In alternative to the SSD, a hard disk drive (HDD) may be used. The medium I/F 107 controls reading or writing of data with respect to a storage medium 106 such as a flash memory. The operation key (keys) 108 is operated by a user to input a user instruction such as a user selection of a communication destination of the videoconference terminal 13. The power switch 109 is a switch that turns on or off the power of the videoconference terminal 13.

The network I/F 111 allows communication of data with an external device through the communication network 100 such as the Internet. The camera 112 is an example of built-in imaging device capable of capturing a subject to obtain image data under control of the CPU 101. The imaging element I/F 113 is a circuit that controls driving of the camera 112. The microphone 114 is an example of built-in audio capturing device capable of inputting audio under control of the CPU 101. The audio input/output I/F 116 is a circuit for inputting and outputting an audio signal between the microphone 114 and the speaker 115 under control of the CPU 101. The display I/F 117 is a circuit for transmitting image data to an external display 120 under control of the CPU 101. The external device connection I/F 118 is an interface circuit that connects the videoconference terminal 13 to various external devices. The near-distance communication circuit 119 is a communication circuit that communicates in compliance with the NFC, the Bluetooth, and the like.

The bus line 110 may be an address bus or a data bus, which electrically connects various elements such as the CPU 101 of FIG. 7.

The display 120 is an example of a display device, such as a liquid crystal display or organic electroluminescence (EL) display, which displays an image of a subject, an operation icon, or the like. The display 120 is connected to the display I/F 117 by the cable 120c. The cable 120c may be an analog red green blue (RGB) (video graphic array (VGA)) signal cable, a component video cable, a high-definition multimedia interface (HDMI) (registered trademark) signal cable, or a digital video interactive (DVI) signal cable.

The camera 112 includes a lens and a solid-state imaging element that converts an image (video) of a subject to electronic data by converting light to electric charge. As the solid-state imaging element, for example, a complementary metal-oxide-semiconductor (CMOS) or a charge-coupled device (CCD) is used. The external device connection I/F 118 is capable of connecting an external device such as an external camera, an external microphone, or an external speaker through a USB cable or the like. In a case in which an external camera is connected, the external camera is driven in preference to the built-in camera 112 under control of the CPU 101. Similarly, in a case in which an external microphone is connected or an external speaker is connected, the external microphone or the external speaker is driven in preference to the built-in microphone 114 or the built-in speaker 115 under control of the CPU 101.

The storage medium 106 is removable from the videoconference terminal 13. The storage medium 106 can be any nonvolatile memory that reads or writes data under control of the CPU 101, such that any memory such as an EEPROM may be used instead of the flash memory 104.

### <Example Screens of Electronic Whiteboard>

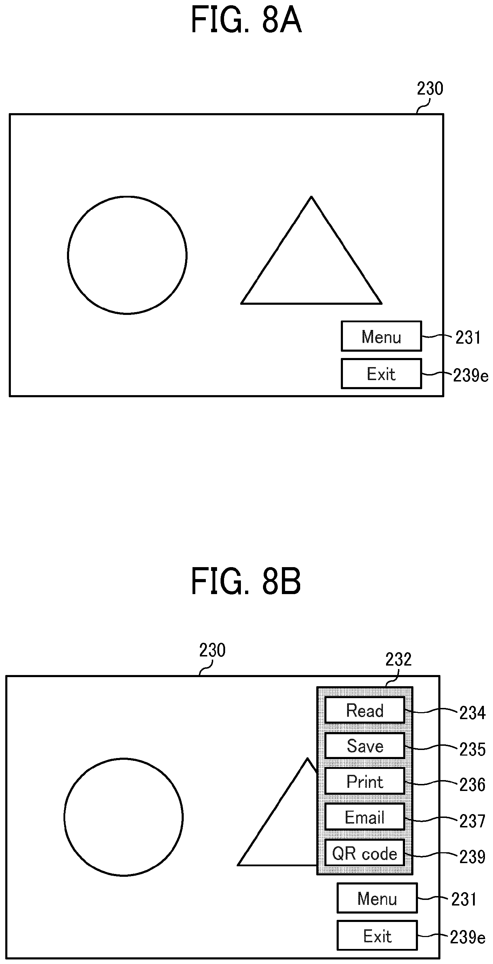

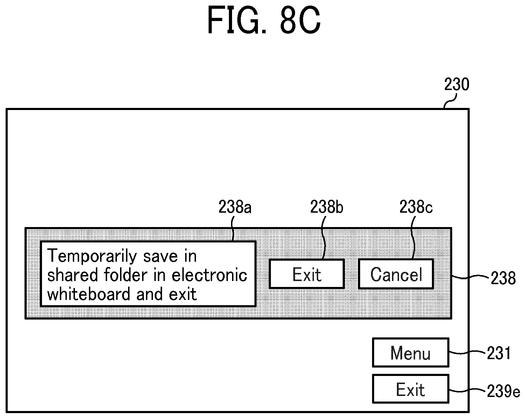

Referring to FIGs. 8A, 8B and 8C, example screens of the electronic whiteboard 2 are described according to the embodiment. FIGs. 8A, 8B, and 8C each illustrates an example screen displayed on the display 220 of the electronic whiteboard 2. The electronic whiteboard 2 displays, on the display 220, a drawing image screen 230 as illustrated in FIG. 8A, for example. The drawing image screen 230 displays a drawing image (such as a circle and a triangle in the figure) drawn by the user with such as the electronic pen 2500. The drawing image screen 230 displays a "Menu" button 231 and an "Exit" button 239e at the lower right. The "Menu" button 231 is a graphical image, which, when selected by the user, causes the electronic whiteboard 2 to perform various types of functions of the electronic whiteboard 2. The "Exit" button 239e is a graphical image, which, when selected, enables the user to log out from the electronic whiteboard 2 and causes the electronic whiteboard 2 to finish displaying a screen. When the user presses the "Menu" button 231 with such as the electronic pen 2500, as illustrated in FIG. 8B, the electronic whiteboard 2 displays, on the drawing image screen 230, a menu selection window (image) 232 for allowing selection of a function provided by the electronic whiteboard 2.

As illustrated in FIG. 8B, the menu selection window 232 includes a "Read" button 234, a "Save" button 235, a "Print" button 236, an "Email" button 237, and a "QR code" button 239.

Of those buttons, the "Read" button 234 is a graphical image, which, when selected, causes the electronic whiteboard 2 to read file data of drawing image that is stored in the SSD 204 after the image is drawn, for display onto the display 220. The "Save" button 235 is a graphical image, which, when selected, causes the electronic whiteboard 2 to store the drawing image drawn by the user in the SSD 204 as file data. The "Print" button 236 is a graphical image, which, when selected, causes the electronic whiteboard 2 to print the drawing image displayed on the drawing image screen 230 using such as the MFP 9. The "Email" button 237 is a graphical image, which, when selected, causes the electronic whiteboard 2 to transmit, to the PC 10a or the PC 10b, etc., the drawing image displayed on the drawing image screen 230, as the drawing image data attached to the email. The "QR code" button 239 is a graphical image, which, when selected, causes the electronic whiteboard 2 to display, on the display 220, a QR code (registered trademark) embedded with a device ID identifying the own device (that is, the electronic whiteboard 2).

When the user presses the "Exit" button 239e with such as the electronic pen 2500, as illustrated in FIG. 8C, the electronic whiteboard 2 displays, on the drawing image screen 230, an exit window 238 for logging out and finishing the display.

As illustrated in FIG. 8C, the exit window 238 includes a "Temporarily save in shared folder in electronic whiteboard and exit" button 238a, an "Exit" button 238b, and a "Cancel" button 238c.

The "Temporarily save in shared folder in electronic whiteboard and exit" button 238a is a graphical image, which, when selected, causes the electronic whiteboard 2 to temporarily store file data the drawing image data as an example of file data, in the SSD 204 of the electronic whiteboard 2, allows the user to log out from the electronic whiteboard 2, and causes the electronic whiteboard 2 to finish display. The "Exit" button 238b is a graphical image, which, when selected, allows the user to log out from the electronic whiteboard 2, and causes the electronic whiteboard 2 to finish displaying, without temporarily storing the drawing image data. In other words, when the "Exit" button 238b is selected, an image represented by the drawing image data is not to be displayed (redisplayed) the next time when the user logs in the electronic whiteboard 2. The "Cancel" button 238c is a graphical image, which, when selected, causes the electronic whiteboard 2 to finish displaying of the exit window 238 and return to the drawing image screen 230 illustrated in FIG. 8A.

Any one of the IDs described above is an example of identification information identifying the device or terminal, or the user operating the device or terminal. The device ID is an example of device identification information. The terminal ID is an example of terminal identification information. The user ID is an example of user identification information. Further, the device identification information and the terminal identification information include a production serial number. Furthermore, the user identification information includes an employee number, a driver license number, and an individual number called "My Number" under the Japan's Social Security and Tax Number System.

Further, any one of the above-described control programs may be recorded in a file in a format installable or executable on a computer-readable storage medium for distribution. Examples of the storage medium include, but not limited to, a CD-R, DVD, blue-ray disc, and SD card. In addition, such storage medium may be provided in the form of a program product to users within a certain country or outside that country.

Each of the terminal management server 5 and the file management server 8 may be configured by a single computer or a plurality of computers to which divided portions (functions, means, or storages) are arbitrarily allocated.

### <Functional Configuration of Communication System>

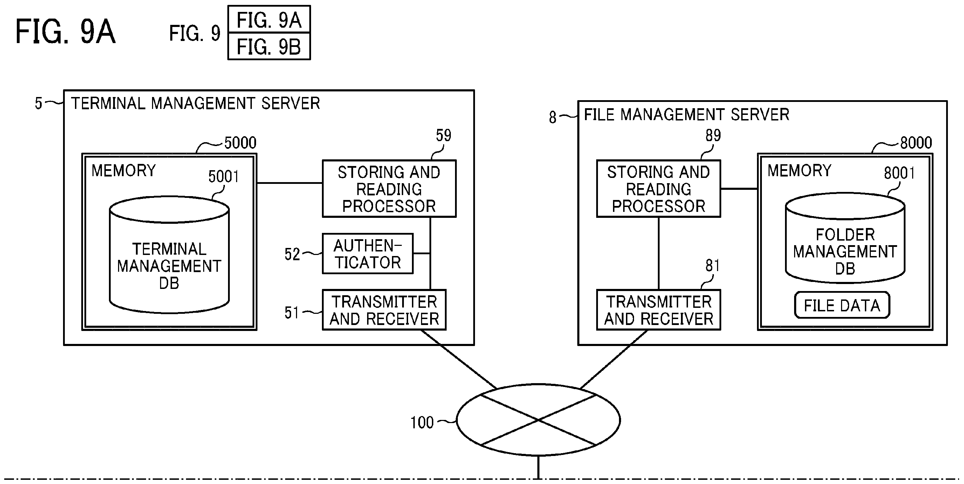

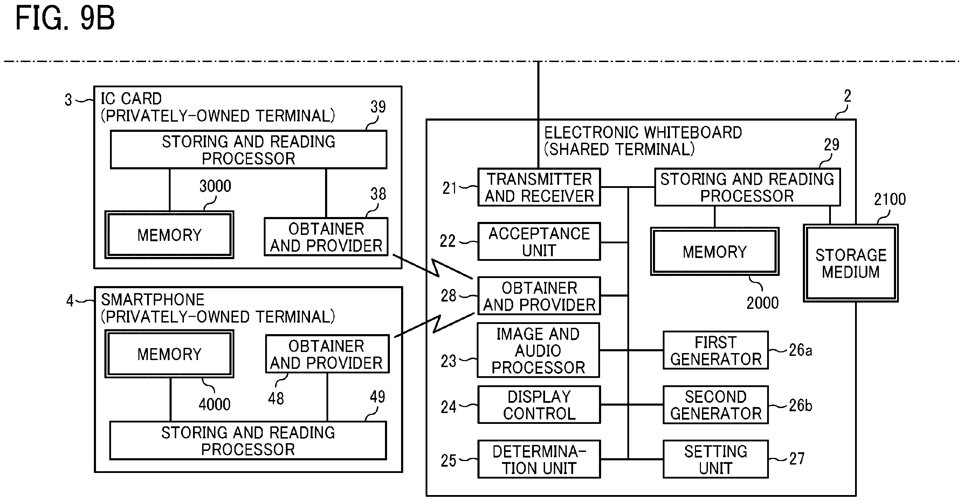

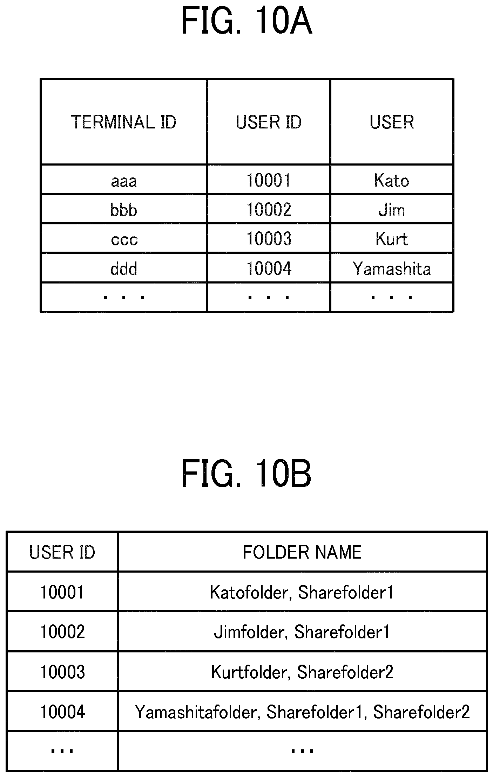

Referring to FIGs. 9A and 9B and FIGs. 10A and 10B, a functional configuration of the communication system 1 is described according to the embodiment. FIGs. 9A and 9B are a block diagram illustrating a functional configuration of the communication system 1. In FIGs. 9A and 9B, only a part of those terminals, devices, and servers illustrated in FIG. 1 is illustrated, which relates to processing or operation described below.

### <Functional Configuration of Electronic Whiteboard>

As illustrated in FIG. 9B, the electronic whiteboard 2 includes a transmitter and receiver 21, an acceptance unit 22, an image and audio processor 23, a display control 24, a determination unit 25, a first generator 26a, a second generator 26b, a setting unit 27, an obtainer and provider 28, and a storing and reading processor 29. These units are functions that are implemented by or that are caused to function by operating any of the elements illustrated in FIG. 2 in cooperation with the instructions of the CPU 201 according to the electronic whiteboard control program expanded from the SSD 204 to the RAM 203. The electronic whiteboard 2 further includes a memory 2000, which is implemented by the RAM 203 and SSD 204 illustrated in FIG. 2.

### (Each Functional Unit of Electronic Whiteboard)

Next, each functional unit of the electronic whiteboard 2 is described according to the embodiment. The transmitter and receiver 21, which may be implemented by the instructions of the CPU 201, the network I/F 205, and the external device connection I/F 206, illustrated in FIG. 2, transmits or receives various types of data (or information) to or from other terminal, apparatus, or system through the communication network 100.

The acceptance unit 22, which is implemented by the instructions of the CPU 201, the contact sensor 214, and the electronic pen controller 216, illustrated in FIG. 2, accepts various inputs from the user.

The image and audio processor 23, which is implemented by the instructions of the CPU 201, illustrated in FIG. 2, applies image processing to image data that is obtained by capturing a subject by the camera 2400. After the audio of the user is converted to an audio signal by the microphone 2200, the image and audio processor 23 applies processing to audio data according to this audio signal. The image and audio processor 23 outputs the audio signal according to the audio data to the speaker 2300, and the speaker 2300 outputs audio. The image and audio processor 23 obtains drawing image data, drawn by the user with the electronic pen 2500 or the user's hand H onto the display 220, and converts the drawing image data to coordinate data. For example, when the electronic whiteboard 2x transmits the coordinate data to the electronic whiteboard 2y at another site, the electronic whiteboard 2y controls the display 220 of the electronic whiteboard 2y to display a drawing image having the same content based on the received coordinate data.

The display control 24, which is implemented by the instructions of the CPU 201 illustrated in FIG. 2 and by the display controller 213 illustrated in FIG. 2, controls the display 220 to display a drawing image.

The determination unit 25, which is implemented by the instructions of the CPU 201 illustrated in FIG. 2, determines whether the electronic whiteboard 2 has received any terminal ID, for example, from the IC card 3 or the smartphone 4.

The first generator 26a, which is implemented by the instructions of the CPU 201 illustrated in FIG. 2, generates image data in PDF, from the drawing image data in bitmap that has been generated based on drawing by the user. The second generator 26b, which is implemented by the instructions of the CPU 201 illustrated in FIG. 2, generates image data in RPCS, from the drawing image data in bitmap that has been generated based on drawing by the user. The image data may be in any suitable format other than RPCS, such as in PDL or PS.

The setting unit 27, which is implemented by the instructions of the CPU 201 illustrated in FIG. 2, configures settings such as an email sender, an email destination, or a print requester name of a user who requests printing in accordance with print data.

The obtainer and provider 28, which is implemented by the instructions of the CPU 201 and the near-distance communication circuit 219 with the antenna 219a, illustrated in FIG. 2, communicates with the privately-owned terminal such as the IC card 3 or the smartphone 4 to obtain or provide data from or to the IC card 3 or the smartphone 4 by near-distance communication.

The storing and reading processor 29, which is implemented by the instructions of the CPU 201 and the SSD 204 illustrated in FIG. 2, performs processing to store various types of data in the memory 2000 or a storage medium 2100 or to read various types of data stored in the memory 2000 or the storage medium 2100. Further, every time image data and audio data are received in performing communication with other electronic whiteboard or videoconference terminal, the memory 2000 overwrites the image data and audio data. The display 220 displays an image based on image data before being overwritten, and the speaker 2300 outputs audio based on audio data before being overwritten. The storage medium 2100 is implemented by the USB memory 2600 illustrated in FIG. 2.

### <Functional Configuration of IC Card>

As illustrated in FIG. 9B, the IC card 3 includes an obtainer and provider 38, and a storing and reading processor 39. These units are functions that are implemented by or that are caused to function by operating any of the elements illustrated in FIG. 3 in cooperation with the instructions of the CPU 311 according to the IC card control program expanded from the EEPROM 314 to the RAM 313. The IC card 3 further includes a memory 3000, which is implemented by the RAM 313 and the EEPROM 314 illustrated in FIG. 3.

### (Each Functional Unit of IC Card)

Next, each functional unit of the IC card 3 is described according to the embodiment. The obtainer and provider 38, which is implemented by the instructions of the CPU 311 and the antenna coil 330 illustrated in FIG. 3, communicates with the electronic whiteboard 2 to obtain or provide data from or to the electronic whiteboard 2 by near-distance communication.

The storing and reading processor 39, which is implemented by the instructions of the CPU 311 illustrated in FIG. 3, performs processing to store various types of data in the memory 3000 or read various types of data stored in the memory 3000. The memory 3000 stores a terminal ID for identifying the IC card as one example of privately-owned terminal.

### <Functional Configuration of Smartphone>

As illustrated in FIG. 9B, the smartphone 4 includes an obtainer and provider 48 and a storing and reading processor 49. These units are functions that are implemented by or that are caused to function by operating any of the elements illustrated in FIG. 4 in cooperation with the instructions of the CPU 401 according to the smartphone control program expanded from the EEPROM 404 to the RAM 403. The smartphone 4 further includes a memory 4000, which is implemented by the RAM 403 and the EEPROM 404 illustrated in FIG. 4.

### (Each Functional Unit of Smartphone)

Next, each functional unit of the smartphone 4 is described according to the embodiment. The obtainer and provider 48, which is implemented by the instructions of the CPU401 and the near-distance communication circuit 419 with the antenna 419a, illustrated in FIG. 4, communicates with the electronic whiteboard 2 to obtain or provide data from or to the electronic whiteboard 2 by near-distance communication.

The storing and reading processor 49, which is implemented by the instructions of the CPU 401 illustrated in FIG. 4, performs processing to store various types of data in the memory 4000 or read various types of data stored in the memory 4000. The memory 4000 stores a terminal ID for identifying the smartphone 4 as one example of privately-owned terminal.

### <Functional Configuration of Terminal Management Server>

The terminal management server 5 includes a transmitter and receiver 51, an authenticator 52, and a storing and reading processor 59. These units are functions that are implemented by or that are caused to function by operating any of the elements illustrated in FIG. 5 in cooperation with the instructions of the CPU 501 according to the terminal control program expanded from the HD 504 to the RAM 503. The terminal management server 5 includes a memory 5000, which is implemented by the HD 504 illustrated in FIG. 5.

### (Terminal Management Table)

FIG. 10A is a conceptual diagram illustrating a terminal management table according to the embodiment. The memory 5000 stores a terminal management DB 5001, which is implemented by the terminal management table illustrated in FIG. 10A. This terminal management table stores, for each one of a plurality of privately-owned terminals (IC card 3, smartphone 4) registered to the terminal management server 5, a user ID identifying a user who owns the privately-owned terminal and a user name in association with the terminal ID identifying the privately-owned terminal.

### (Each Functional Unit of Terminal Management Server)

Next, each functional unit of the terminal management server 5 is described in detail according to the embodiment. In the following description of the functional configuration of the terminal management server 5, relationships of one or more hardware elements in FIG. 5 with each functional unit of the terminal management server 5 in FIG. 9A will also be described.

The transmitter and receiver 51 of the terminal management server 5 illustrated in FIG. 9A, which is implemented by the instructions of the CPU 501 illustrated in FIG. 5 and by the network I/F 509 illustrated in FIG. 5, transmits or receives various types of data (or information) to or from another terminal, device, or system via the communication network 100.

The authenticator 52, which is implemented by the instructions of the CPU 501 illustrated in FIG. 5, determines whether a terminal ID transmitted from the electronic whiteboard 2 is a privately-owned terminal (IC card 3, smartphone 4) owned by the authorized user, which is previously registered.

The storing and reading processor 59, which is implemented by the instructions of the CPU 501 illustrated in FIG. 5 and the HDD 505 illustrated in FIG. 5, performs processing to store various types of data in the memory 5000 or read various types of data stored in the memory 5000.

### <Functional Configuration of File Management Server>

The file management server 8 includes a transmitter and receiver 81, and a storing and reading processor 89. These units are functions that are implemented by or that are caused to function by operating any of the elements illustrated in FIG. 5 in cooperation with the instructions of the CPU 501 according to a folder control program expanded from the HD 504 to the RAM 503. The file management server 8 further includes a memory 8000, which is implemented by the HD 504 illustrated in FIG. 5.

### (Folder Management Table)

FIG. 10B is a conceptual diagram illustrating a folder management table according to the embodiment. The memory 8000 stores a folder management DB 8001, which is implemented by the folder management table illustrated in FIG. 10B. The folder management table stores, for each of one or more registered users being managed by the file management server 8, a user ID identifying the user in association with a folder name of a private folder that is external to a shared terminal (e.g., electronic whiteboard 2) and accessible by the user and a folder name of a shared folder that is external to the shared terminal and accessible by the user. Each folder is a destination to which the file data is to be stored and a source from which the file data is to be read out.

For example, the user A (Kato) is able to access his external private folder ("Katofolder", in this example) and an external shared folder SF1 ("Sharefolder 1" in this example).

Further, the user B (Jim) is able to access his external private folder ("Jimfolder", in this example) and the external shared folder SF1 ("Sharefolder 1", in this example), which is accessible also by the user A.

Further, a user C (Kurt) is able to access his external private folder ("Kurtfolder", in this example) and an external shared folder SF2 ("Sharefolder 2", in this example), which is different from the external shared folder SF1 accessible by the user A.

Further, a user D (Yamashita) is able to access his external private folder ("Yamashitafolder", in this example), the external shared folder SF1 ("Sharefolder 1", in this example), which is accessible also by the users A and B, and the external shared folder SF2 ("Sharefolder 2", in this example), which is accessible also by the user C. Thus, some users are able to access a given external shared folder, while the other users are not able to the given external shared folder.

The above-described folder management table of FIG. 10B, which is stored in the folder management DB 8001, indicates that the user A (Kato) and user B (Jim) are able to access the shared folder SF1, since both of them are engaged in the same work. Further, the folder management table of FIG. 10B indicates that the user C (Kurt) is not able to access the shared folder SF1, since the user C is engaged in the work different from that of the user A and the user B. On the other hand, the folder management table of FIG. 10B indicates that although the user C is able to access the shared folder SF2, the user A and the user B are not able to access the shared folder SF2. Furthermore, the folder management table of FIG. 10 indicates that the user D (Yamashita), who is a boss or a manager of the users A, B and C, is able to access both of the shared folder SF1 and the shared folder SF2.

### (Each Functional Unit of File Management Server)

Next, each functional unit of the file management server 8 will be described in detail. In the following description of the functional configuration of the file management server 8, relationships of one or more hardware elements in FIG. 5 with each functional unit of the file management server 8 in FIG. 9A will also be described.

The transmitter and receiver 81 of the file management server 8 illustrated in FIG. 9A, which is implemented by the instructions of the CPU 501 illustrated in FIG. 5 and by the network I/F 509 illustrated in FIG. 5, transmits or receives various types of data (or information) to or from another terminal, device, or system via the communication network 100.

The storing and reading processor 89, which is implemented by the instructions of the CPU 501 illustrated in FIG. 5 and the HDD 505 illustrated in FIG. 5, performs processing to store various types of data in the memory 8000 or read various types of data stored in the memory 8000.

### <Operation>

In the following, operations, performed by the communication system 1, are described according to embodiments of the present invention. In the following description, requests and results are transmitted and received as data (information).

### <Login Process>

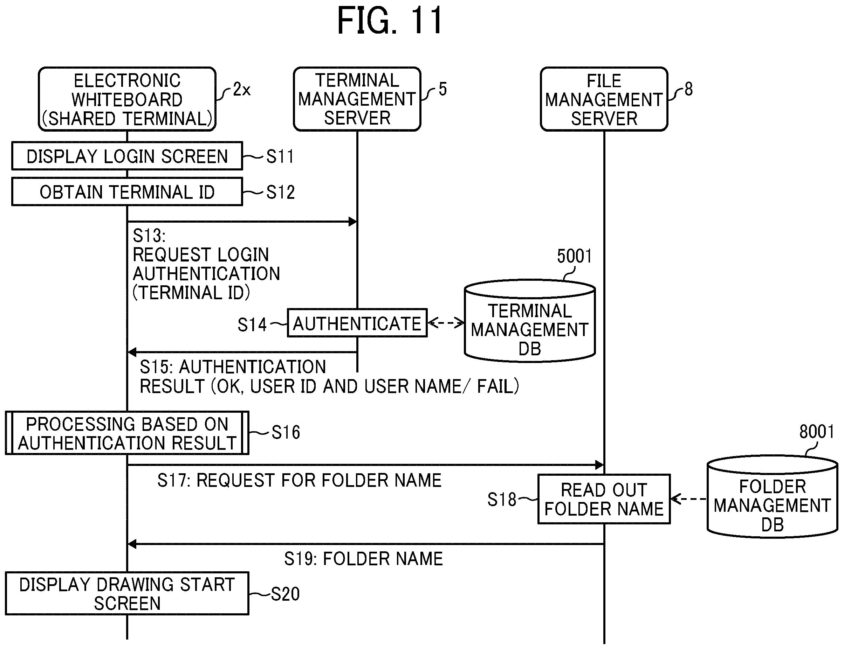

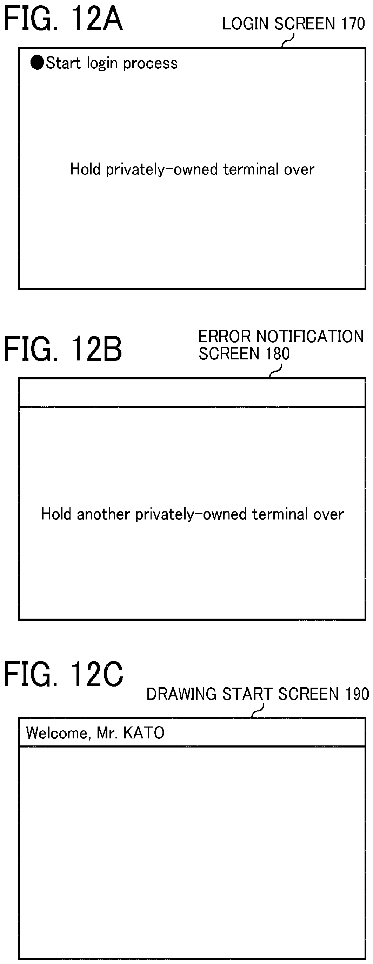

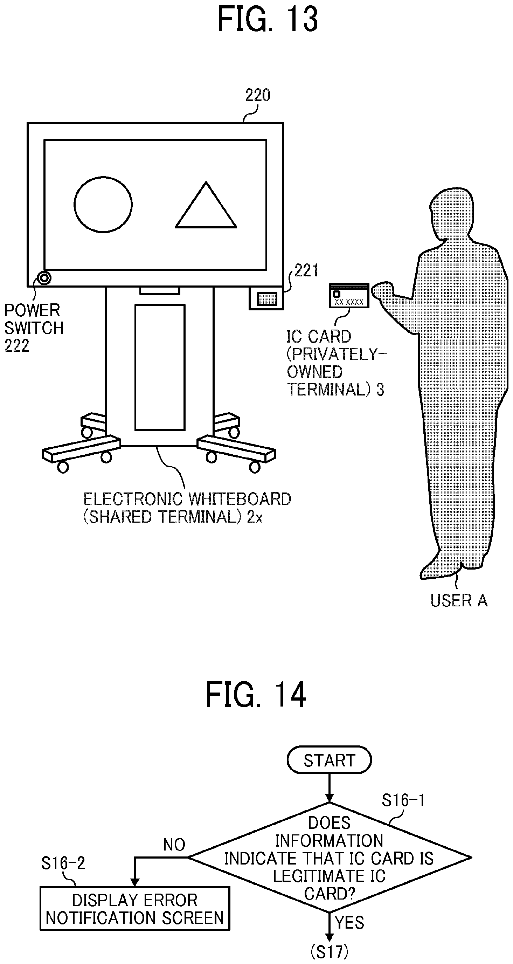

Referring to FIGs. 11 to 14, a description is given of a login process according to the embodiment. FIG. 11 is a sequence diagram illustrating a login process according to the embodiment. FIGs. 12A, 12B, and 12C each illustrates an example screen displayed on the display 220 of the electronic whiteboard 2x. FIG. 13 is an illustration for explaining a use scenario of the electronic whiteboard 2x, according to the embodiment.

The following describes an example case in which the user A and the user B are having a meeting in a certain meeting room using the electronic whiteboard 2x, as illustrated in FIG. 1. In this example, the user A performs a login operation using the electronic whiteboard 2x.

As illustrated in FIG. 13, in response to pressing of the power switch 222 of the electronic whiteboard 2x by the user, the display control 24 controls the display 220 to display a login screen 170 as illustrated in FIG. 12A (S11). Next, as illustrated in FIG. 13, when the user A brings (holds) his or her IC card 3 in proximity of (over) a near-distance communication device 221 of the electronic whiteboard 2x, the obtainer and provider 28 of the electronic whiteboard 2x obtains the terminal ID of the IC card from the obtainer and provider 38 of the IC card 3 (S12). The transmitter and receiver 21 of the electronic whiteboard 2x transmits a request for login authentication to the terminal management server 5 (S13). This request for login authentication includes the terminal ID obtained at S12. The terminal management server 5 receives the request for login authentication at the transmitter and receiver 51.

Next, the authenticator 52 of the terminal management server 5 performs login authentication of the IC card 3 using the terminal ID that is obtained (S14). More specifically, the storing and reading processor 59 searches the terminal management table (FIG. 10A) using the terminal ID received at S13 as a search key, to obtain the user ID associated with the terminal ID. When the user ID associated with the terminal ID is found, the authenticator 52 confirms the terminal ID of the IC card 3 to determine that the IC card 3 (terminal ID) is a legitimate IC card owned by the authorized user identified with the user ID that is found. When the user ID associated with the terminal ID is not found, the authenticator 52 determines that the IC card 3 (terminal ID) is not a legitimate IC card owned by the authorized user.

Next, the transmitter and receiver 51 of the terminal management server 5 transmits an authentication result to the electronic whiteboard 2x (S15). When the authenticator 52 determines that the IC card 3 is a legitimate IC card, the authentication result includes information indicating that the IC card 3 is a legitimate IC card, the user ID identifying the user who owns the IC card 3, and the user name. When the authenticator 52 determines that the IC card 3 is not a legitimate IC card, the authentication result includes information indicating that the IC card 3 is not a legitimate IC card. The electronic whiteboard 2x receives the authentication result at the transmitter and receiver 21.

Next, the electronic whiteboard 2x performs an operation based on the authentication result (S16). Referring to FIG. 14, a description is given of S16 of the operation performed based on the authentication result. FIG. 14 is a flowchart illustrating an operation performed according to the authentication result when logging in.

As illustrated in FIG. 14, the determination unit 25 determines whether the information included in the authentication result received at S15 indicates that the IC card 3 is a legitimate IC card (S16-1). In other words, the determination unit 25 determines whether the terminal ID transmitted at S13 is a legitimate terminal ID. When the determination unit 25 determines that the information included in the authentication result indicates that the IC card 3 is not a legitimate IC card, i.e., that login has failed (S16-1: NO), the display control 24 controls the display 220 to display an error notification screen 180 as illustrated in FIG. 12B (S16-2). When the determination unit 25 determines that the information included in the authentication result indicates that the IC card 3 is a legitimate IC card, i.e., that login is successful (S16-1: YES), the operation proceeds to S17. The following describes a case in which the authentication result includes the information indicating that the IC card 3 is a legitimate IC card.

The transmitter and receiver 21 of the electronic whiteboard 2x transmits a request for a folder name to the file management server 8 (S17). This folder name request includes the user ID that is received at S15. The file management server 8 receives the folder name request at the transmitter and receiver 81.

Next, the storing and reading processor 89 of the file management server 8 searches the folder management table (FIG. 10B), using the user ID received at S17 as a search key, to obtain all folder names associated with the user ID (S18). The transmitter and receiver 81 transmits the obtained folder names to the electronic whiteboard 2x (S20). The electronic whiteboard 2x receives the folder names at the transmitter and receiver 21. The folder names are not displayed on the display 220 until a folder selection screen 240 for selecting a folder from which file data is to be read or a folder selection screen 250 for selecting a folder to which file data is to be saved. The description is given later of the folder selection screen 240 and the folder selection screen 250.

The display control 24 controls the display 220 to display a drawing start screen 190 as illustrated in FIG. 12C (S20). This drawing start screen 190 includes a ticker indicating that the user can start drawing, such as "Welcome, Mr. Kato". This text "Kato" is generated using the user name that is received at S15. Thus, the user A and the user B are able to start drawing on the electronic whiteboard 2x.

### <Loading File data>

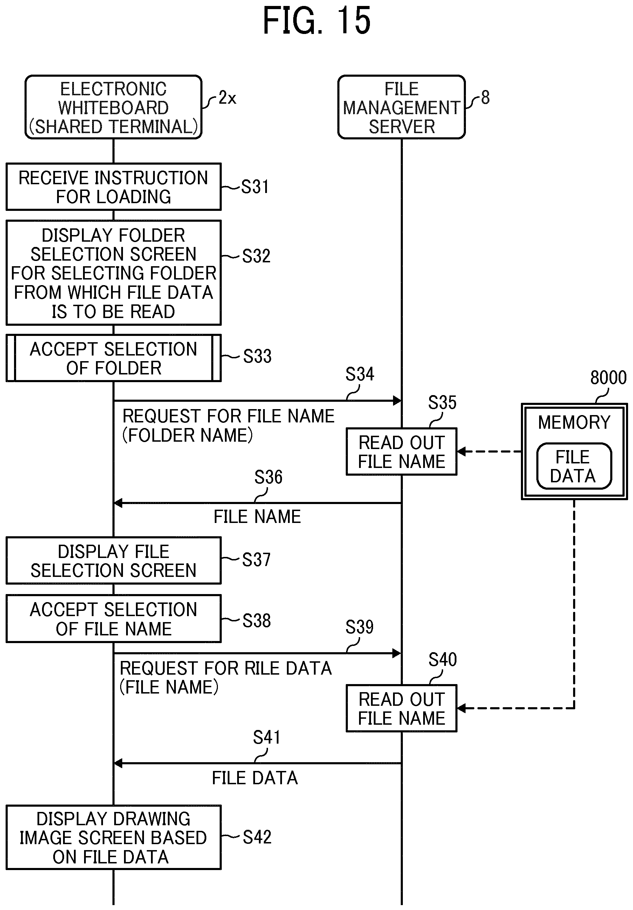

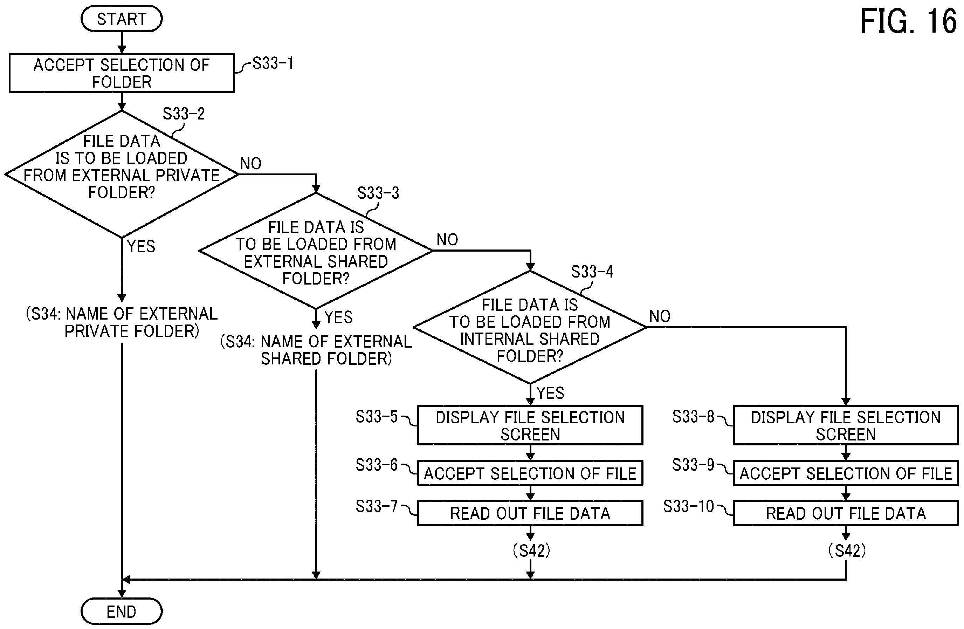

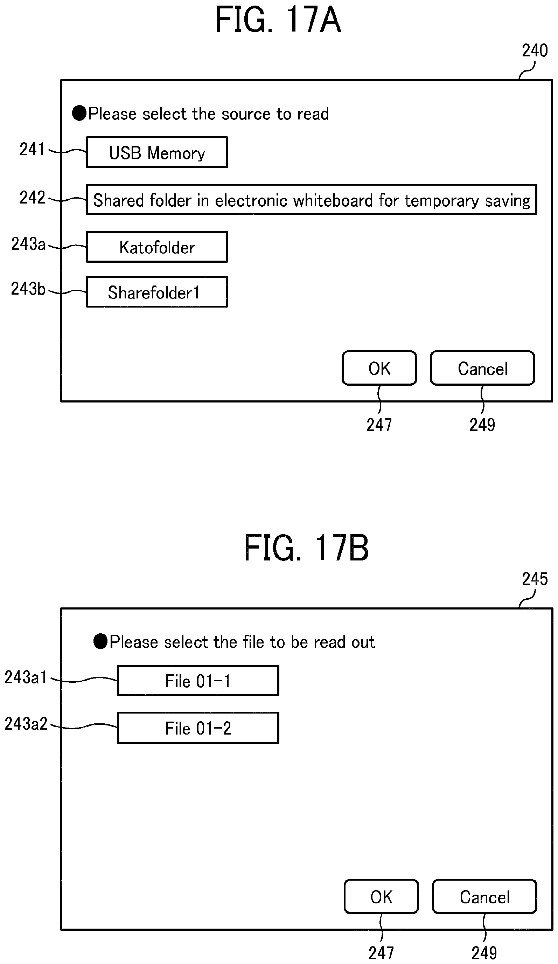

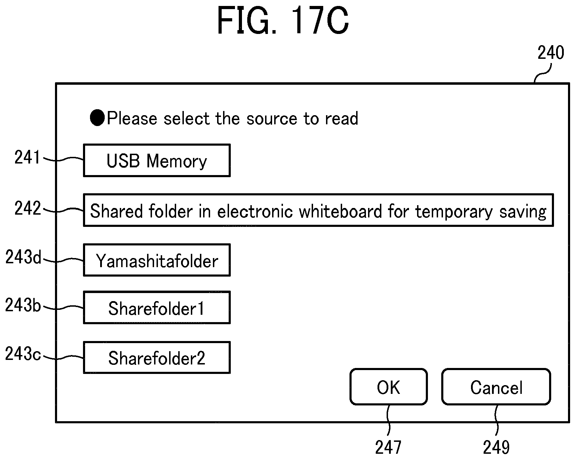

First, a description is given of an operation of loading file data, with reference to FIG. 15, FIG. 16, and FIGs. 17A to 17C. FIG. 15 is a sequence diagram illustrating an operation of loading file data according to the embodiment. FIG. 16 is a flowchart illustrating an operation of selecting a folder from which file data is to be loaded (read), according to the embodiment. FIGs. 17A, 17B, and 17C each illustrates an example screen displayed on the display 220 of the electronic whiteboard 2x, when loading file data.

When the user A (Kato) presses (touches) the "Read" button 234 illustrated in FIG. 8B, the acceptance unit 22 accepts an instruction for displaying a folder selection screen 240 for selecting a folder from which file data is to be read (S31). The display control 24 controls the display 220 to display the folder selection screen 240 for selecting a folder from which file data is to be read, as illustrated in FIG. 17A (S32). This folder selection screen 240 includes a "USB memory" button 241, a "Shared folder in electronic whiteboard for temporary saving" button 242, a "Katofolder" button 243a, and a "Sharefolder1" button 243b. The "Katofolder" button 243a is an example of an external private folder button. The "Sharefolder1" button 243b is an example of an external shared folder button. The "USB memory" button 241 is a graphical image, which, when selected, enables the user to give an instruction for loading (reading out) file data from the USB memory 2600 illustrated in FIG. 2. The "Shared folder in electronic whiteboard for temporary saving" button 242 is a graphical image, which, when selected, enables the user to give an instruction for storing file data temporarily in a shared folder in the memory 2000 in substantially the same manner as the "Temporarily save in shared folder in electronic whiteboard and exit" button 238a illustrated in FIG. 8C.

The "Katofolder" button 243a is a graphical image, which, when selected, enables the user to give an instruction for loading (reading out) file data from a private folder of the user A (Kato) stored in the memory 8000 of the file management server 8.

The "Sharefolder1" button 243b is a graphical image, which, when selected, enables the user to give an instruction for loading (reading out) file data from the shared folder SF1 stored in the memory 8000 of the file management server 8.

As described, when the folder selection screen 240 for selecting a folder from which file data is to be read is displayed, the button 243a including a user name of the user A, who logs in the electronic whiteboard 2, and the button 243b indicating the shared folder SF1 that is accessible by the user A are displayed by default. On the other hand, the user A (Kato) is not allowed to access the private folders of user B (Jim), user C (Kurt), and user D (Yamashita), each being an example of other users. In addition, the user A (Kato) is not allowed to access the shared folder SF2 that is accessible by the user C (Kurt).

In addition, at the lower part of the folder selection screen 240 (FIG. 17A), an "OK" button 247 and a "Cancel" button 249 are displayed. The "OK" button 247 is a graphical image, which, when selected, after any one of the buttons 241, 242, 243a and 243b is selected, enables a user to confirm the selection of button. The "Cancel" button 249 is a graphical image, which, when selected, enables the user to cancel the selection of any one of the buttons 241, 242, 243a and 243b.

In addition, in the case where the user D (Yamashita) uses the electronic whiteboard 2x as a legitimate user who is authorized through the login process as illustrated in FIG. 11, the display control 24 controls the display 220 to display the folder selection screen 240 as illustrated in FIG. 17C, in response to pressing, by the user D, the "Read" button 234 on the screen illustrated in FIG. 8B. In this case, in addition to the "USB memory" button 241, the "Shared folder in electronic whiteboard for temporary saving" button 242, and a "Yamashita" button 243d indicating the private folder of the user D, a button 243b indicating the shared folder SF1 and a button 243c indicating the shared folder SF2 are also displayed. For example, in the case where the user D is a boss of the users A, B and C, although the user D is not allowed to access the private folder of each of the users A, B and C, the user D is allowed to access the shared folders that are accessible by the users A, B and C.

Next, the electronic whiteboard 2x performs an operation of accepting selection of a folder (S33). Hereinafter, a description is given of a folder selection process performed when loading (reading out) file data, with reference to FIG. 16.

First, in response to pressing, by the user A, any one of the buttons 241, 242, 243a and 243b on the folder selection screen 240 illustrated in FIG. 17A, the acceptance unit 22 accepts selection of folder corresponding to the pressed button (S33-1).

Next, the determination unit 25 determines whether "Katofolder" button 243a is pressed (S33-2). In other words, at step S33-2, the determination unit 25 determines whether the external private folder is selected as a source from which file data is to be read out. When the determination unit 25 determines that the external private folder is selected as a source from which file data is to be read out (S33-2: YES), the operation proceeds to step S34.

Referring again to FIG. 15, the transmitter and receiver 21 of the electronic whiteboard 2x transmits a request for a file name to the file management server 8 (S34). This request includes the folder name of the external private folder selected at S33-1. The file management server 8 receives the request for file name at the transmitter and receiver 81.

Next, based on the folder name received at step S34, the storing and reading processor 89 of the file management server 8 reads out all of file names stored in a folder having this folder name, from the memory 8000 (S35). The transmitter and receiver 81 transmits the file names that are read out at step S35, to the electronic whiteboard 2x (S36). The electronic whiteboard 2x receives the file names at the transmitter and receiver 21.

Next, the display control 24 of the electronic whiteboard 2x controls the display 220 to display a file selection screen 245 as illustrated in FIG. 17B (S37). On this file selection screen 245, file names 243a1 and 243a2 are displayed, each being a file name of file data. In addition, at the lower part of the file selection screen 245 (FIG. 17B), the "OK" button 247 and the "Cancel" button 249 are displayed. The "OK" button 247 is a graphical image, which, when selected, enables a user to confirm selection of the file name, after any one of the file names 243a1 and 243a2 is selected. The "Cancel" button 249 is a graphical image, which, when selected, enables the user to cancel the selection of file name.

Next, in response to pressing, by the user A, one of the file names of 243a1 and 243a2, the acceptance unit 22 accepts the selection of the file name(S38). The transmitter and receiver 21 transmits a request for file data to the file management server 8 (S39). This request includes the file name that is selected at S38. The file management server 8 receives the request for file data at the transmitter and receiver 81.

Next, based on the file name received at step S39, the storing and reading processor 89 of the file management server 8 reads out file data identified by this file name, from the memory 8000 (S40). The transmitter and receiver 81 transmits the file data that is read out at step S40 to the electronic whiteboard 2x (S41). The electronic whiteboard 2x receives the file data at the transmitter and receiver 21.

Next, based on the file data received at step S41, the display control 24 of the electronic whiteboard 2x controls the display 220 to display the drawing image screen 230 as illustrated in FIG. 8A (S42).

Next, referring again to FIG. 16, based on the determination that the external private folder is not selected as a source from which file data is to be read out (S33-2: NO), the determination unit 25 further determines whether "Sharefolder1" button 243b is pressed (S33-3). In other words, at step S33-3, the determination unit 25 determines whether the external shared folder is selected as a source from which file data is to be read out.

When the determination unit 25 determines that the external shared folder is selected as a source from which file data is to be read out (S33-3: YES), the operation proceeds to step S34. In this case, at step S34, the transmitter and receiver 21 transmits the request for file name, including the folder name ("Sharefolder1", in this example) of the external shared folder.

By contrast, when the determination unit 25 determines that the external shared folder is not selected as a source from which file data is to be read out (S33-3: NO), the determination unit 25 further determines whether the "Shared folder in electronic whiteboard for temporary saving" button 242 is pressed (S33-4). In other words, at step S33-4, the determination unit 25 determines whether the shared folder in the electronic whiteboard 2x is selected as a source from which file data is to be read out.

When the determination unit 25 determines that the shared folder in the electronic whiteboard 2x is selected as a source from which file data is to be read out (S33-4: YES), the display control 24 controls the display 220 to display the file selection screen 245 for selecting a file to be read, as illustrated in FIG. 17B, for example (S33-5). On this file selection screen 245, the file names 243a1 and 243a2 are displayed, each being a file name of file data. In addition, at the lower part of the file selection screen 245 (FIG. 17B), the "OK" button 247 and the "Cancel" button 249 are displayed. The "OK" button 247 is a graphical image, which, when selected, enables a user to confirm selection of the file name, after any one of the file names 243a1 and 243a2 is selected. The "Cancel" button 249 is a graphical image, which, when selected, enables the user to cancel the selection of file name.

Next, when the user A presses and selects a desired file name on the file selection screen 245 illustrated in FIG. 17B, and then presses the "OK" button 247, the acceptance unit 22 accepts the selection of a file to be read out (S33-6). The storing and reading processor 29 loads (reads out) file data relating to the file selected at step S33-6 from the memory 2000 (S33-7). Then, the operation proceeds to step S42, and the display control 24 controls the display 220 to display an image, which is a content of the file data that is read out at S33-7.

By contrast, when the determination unit 25 determines that the shared folder in the electronic whiteboard 2x is not selected as a source from which file data is to be read out (S33-4: NO), the display control 24 controls the display 220 to display the file selection screen 245 for selecting a file to be read, as illustrated in FIG. 17B, for example (S33-8).

Next, when the user A presses and selects a desired file name on the file selection screen 245 illustrated in FIG. 17B, and then presses the "OK" button 247, the acceptance unit 22 accepts the selection of a file to be read out (S33-9). The storing and reading processor 29 loads (reads out) file data relating to the file selected at step S33-9 from the storage medium 2100, which is implemented by the USB memory 2600 (S33-10). Then, the operation proceeds to step S42, and the display control 24 controls the display 220 to display an image, which is a content of the file data that is read out at S33-10.

After the steps described heretofore, the operation of loading the file data ends.

### <Saving File Data>

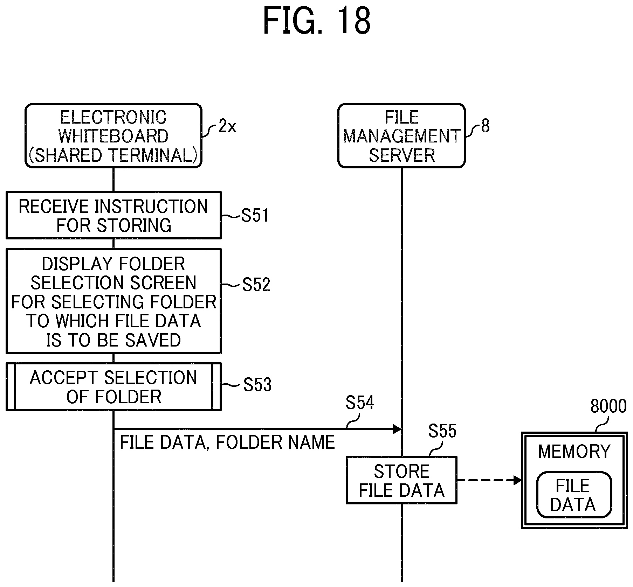

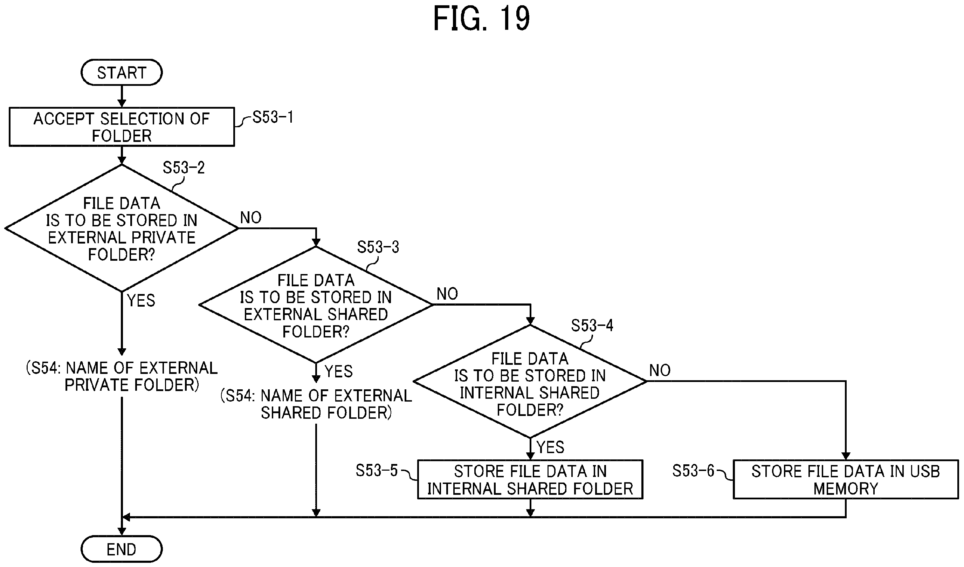

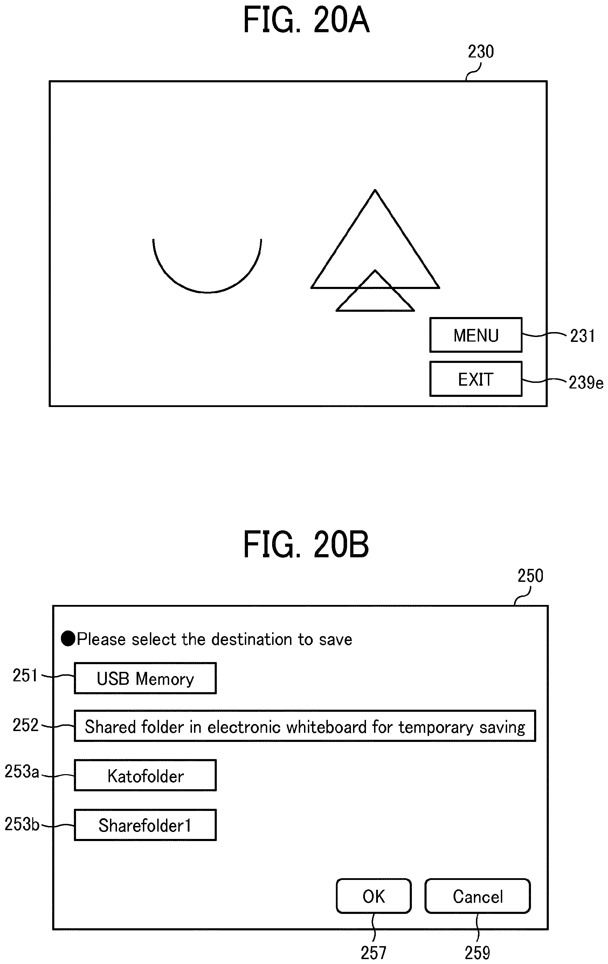

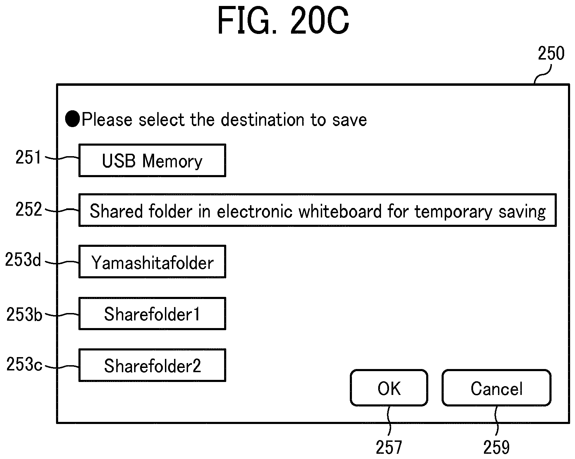

Next, a description is given of an operation of saving file data, with reference to FIG. 18, FIG. 19, and FIGs. 20A to 20C. FIG. 18 is a sequence diagram illustrating an operation of storing file data, according to the embodiment. FIG. 19 is a flowchart illustrating an operation of selecting a folder in which file data is to be stored, according to the embodiment. FIG. 20A is an example of a screen on which the loaded image is edited, according to the embodiment. FIGs. 20B and 20C, each illustrates an example screen displayed by the display 220 of the electronic whiteboard 2x when storing file data, according to the embodiment.

Hereinafter, a description is given of an example case in which, after the drawing image screen 230 as illustrated in FIG. 8A is displayed through the operation of reading out the file data described above, the user A (Kato) erases an upper half area of a circle on the left side of the screen and adds (draws) a new small triangle in a lower area of a triangle on the right side of the screen, as illustrated in FIG. 20A. When the user A presses the "Menu" button 231 on the screen illustrated in FIG. 20A, and then presses the "Save" button 235 (see FIG. 8B), the acceptance unit 22 accepts an instruction of displaying the folder selection screen 250 for selecting a folder to which file data is to be saved (S51). Examples of the file data to be saved include, but not limited to, data of a drawing image drawn on the display 220 of the electronic whiteboard 2 by any user, an image displayed on the display of the electronic whiteboard 2, an image having its information (such as its file name) displayed on the display of the electronic whiteboard 2, and an image that can be selected by the electronic whiteboard 2 for transmission or reception.

Then, the display control 24 controls the display 220 to display the folder selection screen 250 for selecting a folder to which file data is to be saved, as illustrated in FIG. 20B (S52). This folder selection screen 250 includes a "USB memory" button 251, a "Shared folder in electronic whiteboard for temporary saving" button 252, a "Katofolder" button 253a, and a "Sharefolder1" button 253b. The "Katofolder" button 253a is an example of an external private folder button. The "Sharefolder1" button 253b is an example of an external shared folder button. The "USB memory" button 251 is a graphical image, which, when selected, enables a user to give an instruction for storing file data of the drawing image in the USB memory 2600 illustrated in FIG. 2. The "Shared folder in electronic whiteboard for temporary saving" button 252 is a graphical image, which, when selected, enables the user to give an instruction for temporarily storing file data of the drawing image in the shared folder in the memory 2000.

The "Katofolder" button 253a is a graphical image, which, when selected, enables the user to give an instruction for storing file data of the drawing image in the private folder of the user A (Kato) stored in the memory 8000 of the file management server 8.

The "Sharefolder1" button 253b is a graphical image, which, when selected, allows the user to give an instruction for storing file data of the drawing image in the shared folder SF1 stored in the memory 8000 of the file management server 8.

As described, when the folder selection screen 250 for selecting a folder to which file data is to be saved is displayed, the button 253a including a user name of the user A, who logs in the electronic whiteboard 2x, and the button 253b indicating the shared folder SF1 that is accessible by the user A are displayed by default. On the other hand, the user A (Kato) is not allowed to access the private folders of user B (Jim), user C (Kurt), user D (Yamashita), each being an example of other users. In addition, the user A (Kato) is not allowed to access the shared folder SF2 that is accessible by the user C (Kurt).

In addition, at the lower part of the folder selection screen 250 (FIG. 20B), an "OK" button 257 and a "Cancel" button 259 are displayed. The "OK" button 257 is a graphical image, which, when selected, enables a user to confirm selection of the button, after any one of the buttons 251, 252, 253a and 253b is selected. The "Cancel" button 259 is a graphical image, which, when selected, enables the user to cancel the selection of button.

In addition, in the case where the user D (Yamashita) uses the electronic whiteboard 2x as a legitimate user who is authorized through the login process as illustrated in FIG. 11, the display control 24 controls the display 220 to display the folder selection screen 250 as illustrated in FIG. 20C, in response to pressing, by the user D, the "Save" button 235 on the screen illustrated in FIG. 8B. In this case, in addition to the "USB memory" button 251, the "Shared folder in electronic whiteboard for temporary saving" button 252, and a "Yamashita" button 253d indicating the private folder of the user D, a button 253b indicating the shared folder SF1 and a button 253c indicating the shared folder SF2 are also displayed. For example, in the case where the user D is a boss of the users A, B and C, although the user D is not allowed to access the private folder of each of the users A, B and C, the user D is allowed to access the shared folders that are accessible by the users A, B and C.

Next, the electronic whiteboard 2x performs an operation of accepting selection of a folder (S53). Hereinafter, a description is given of a folder selection process performed when storing file data, with reference to FIG. 19.

First, in response to pressing, by the user A, any one of the buttons 251, 252, 253a and 253b, the acceptance unit 22 accepts selection of a folder corresponding to the pressed button (S53-1).

Next, the determination unit 25 determines whether "Katofolder" button 243a is pressed (S53-2). In other words, at step S53-2, the determination unit 25 determines whether the external private folder is selected as a destination to which file data is to be saved. When the determination unit 25 determines that the external private folder is selected as a destination to which file data is to be saved (S53-2: YES), the operation proceeds to step S54.

Referring again to FIG. 18, the transmitter and receiver 21 of the electronic whiteboard 2x transmits file data of the drawing image as illustrated in FIG. 20A, to the file management server 8 (S54). In addition, when the transmitter and receiver 21 transmits the file data at step S54, the transmitter and receiver 21 also transmits a folder name ("Katofolder", in this case) of the external private folder to which this file data is to be saved. The file management server 8 receives the file data and the folder name at the transmitter and receiver 81.

Since the electronic whiteboard 2x generates a file name when saving the file, the user does not have to enter a file name. For example, the electronic whiteboard 2x obtains the date and time from a built-in electronic timer, and generates a file name "iwb-yyyymmdd-HHMMSS.pdf" based on the obtained date and time. These yyyy, mm, dd, HH, MM, and SS indicate the year, month, day, hour, minute, and second of the obtained date and time, respectively.

Next, based on the folder name received at step S54, the storing and reading processor 89 of the file management server 8 stores the received file data in a folder having the received folder name stored in the memory 8000 (S55). This enables the user A to store the file data of the drawing image in the user A's external private folder.

Next, referring again to FIG. 19, based on the determination that the external private folder is not selected as a destination to which file data is to be saved (S53-2: NO), the determination unit 25 further determines whether "Sharefolder1" button 253b is pressed (S53-3). In other words, at step S53-3, the determination unit 25 determines whether the external shared folder is selected as a destination to which file data is to be saved.

When the determination unit 25 determines that the external shared folder is selected as a destination to which file data is to be saved (S53-3: YES), the operation proceeds to step S54. In addition, when the transmitter and receiver 21 transmits the file data at step S54, the transmitter and receiver 21 also transmits a folder name ("Sharefolder1", in this case) of the external shared folder to which this file data is to be saved. The file management server 8 receives the file data and the folder name at the transmitter and receiver 81.

By contrast, when the determination unit 25 determines that the external shared folder is not selected as a destination to which file data is to be saved (S53-3: NO), the determination unit 25 further determines whether the "Shared folder in electronic whiteboard for temporary saving" button 252 is pressed (S53-4). In other words, at step S53-4, the determination unit 25 determines whether the shared folder in the electronic whiteboard 2x is selected as a destination to which file data is to be saved.

When the determination unit 25 determines that the shared folder in the electronic whiteboard 2x is selected as a destination to which file data is to be saved (S53-4: YES), the storing and reading processor 29 stores the file data in the shared folder stored in the memory 2000 (S53-5).

By contrast, when the determination unit 25 determines that the shared folder in the electronic whiteboard 2x is not selected as a destination to which file data is to be saved (S53-4: NO), the storing and reading processor 29 stores the file data in the storage medium 2100, which is implemented by the USB memory 2600 (S52-6).

After the steps described heretofore, the operation of saving the file data ends.

### <Stroke Data>

The above-described file data includes stroke data. This stroke data is data, which is converted from drawing data, drawn on the display 220 by a user with the electronic pen 2500 or the hand H. By using the stroke data, even when the file data of the drawing image as illustrated in FIG. 8A is stored, it is possible to read out and edit the drawing image that is stored before reading, as illustrated in FIG. 20A.

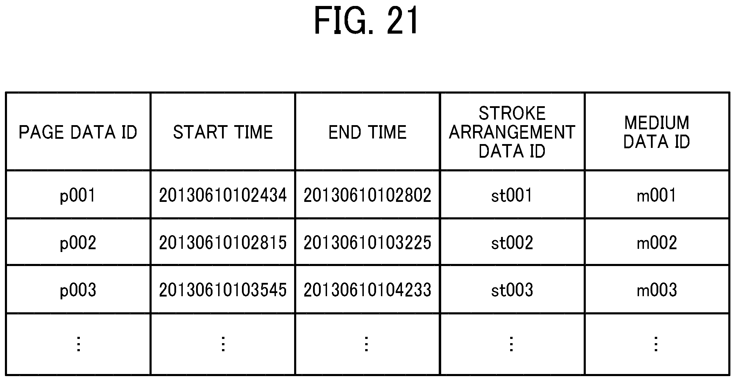

Hereinafter, a description is given of the detail of the stroke data, with reference to FIGs. 21 to 24.

The file data is constituted as page data as illustrated in FIG. 21. FIG. 21 illustrates an example data structure of the page data, according to the embodiment.

The page data includes data corresponding to one page to be displayed on the display 220, which includes stroke arrangement data (one or more pieces of stroke data) and medium data. Referring to FIGs. 21 to 24, content of the page data is described, including various types of parameter included in the page data.

As illustrated in FIG. 21, the page data includes a page data ID, a start time, an end time, a stroke arrangement data ID, and a medium data ID, in association with one another. The page data ID is an identification for identifying a specific page. The start time indicates a date and time when display of the specific page is started. The end time indicates a date and time when updating of the content of the specific page by a stroke drawing made by the user with the electronic pen 2500 or a gesture such as enlarging a screen with the user's hand H is stopped. The stroke arrangement data ID is an identifier for identifying stroke arrangement data generated by a stroke by the user with the electronic pen 2500 or the user's hand H. The medium data ID is an identification for identifying medium data. The stroke arrangement data is data used for displaying a stroke drawing (drawing image) on the display 220. The medium data is data used for displaying a background image on the display 220.

For example, in case the user draws the alphabet "S" with the electronic pen 2500 in one stroke, one stroke data ID is assigned to that stroke drawing "S". In case the user draws the alphabet "T" with the electronic pen 2500 in two strokes, two stroke data IDs are assigned to those two stroke drawings "T".

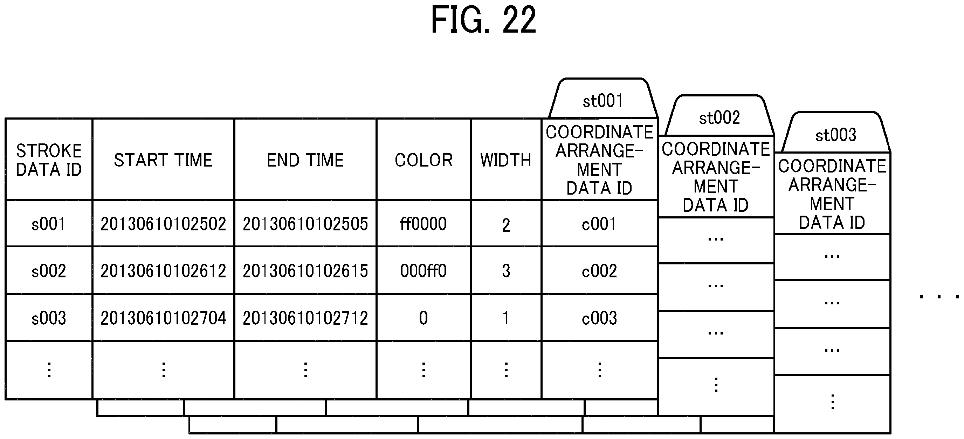

The stroke arrangement data includes various information as illustrated in FIG. 22. FIG. 22 illustrates an example data structure of the stroke arrangement data, according to the embodiment.

As illustrated in FIG. 22, one stroke arrangement data includes a plurality of items of stroke data, each corresponding to a stroke drawing. Each stroke data includes a stroke data ID for identifying that stroke data, start time when drawing of that stroke starts, end time when drawing of that stroke ends, a color of the stroke, a width of the stroke, and a coordinate arrangement data ID for identifying arrangement of points of the stroke.

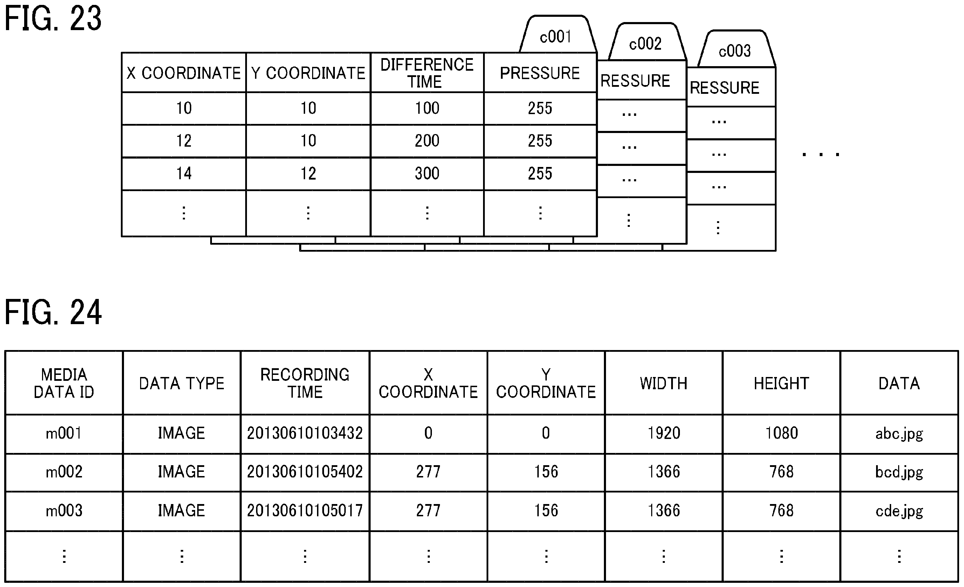

Further, the coordinate arrangement data includes various information as illustrated in FIG. 23. FIG. 23 illustrates an example data structure of the coordinate arrangement data, according to the embodiment.

As illustrated in FIG. 23, the coordinate arrangement data includes a single point (X coordinate value, Y coordinate value) on the display 220, difference time (ms) indicating a difference between the time when that point is drawn and the start time when drawing of the stroke starts, and pressure by the electronic pen 2500 on that single point. That is, one item of coordinate arrangement data in FIG. 22 is a collection of single points in FIG. 23. For example, in case the user draws the alphabet "S" with the electronic pen 2500 in one stroke, a plurality of points is drawn, such that the coordinate arrangement data indicates those points in the stroke drawing.

The medium data of the page data in FIG. 21 includes various information as illustrated in FIG. 24. FIG. 24 illustrates an example data structure of the medium data, according to the embodiment.

As illustrated in FIG. 24, the medium data includes a medium data ID for identifying the medium data as managed with the table of FIG. 21, a type of the medium data, recording time when the medium data is recorded, a position (X coordinate, Y coordinate) of an image to be displayed on the display 220 based on the page data, a size of the image (width, height), and data indicating content of the medium data. The position of the image to be displayed on the display 220 based on the page data indicates the upper left corner of that image, when the X and Y coordinates of the upper left corner of the display 220 are set to (0, 0).

As described above, since the file data of the drawing image is constituted as the stroke data, it is possible to read out and edit the drawing image after it is temporarily stored.

As described above, according to the present embodiment, "Katofolder", "Jimfolder", etc., each being an example of a first private folder name, and the "Sharefolder 1", which is an example of a first shared folder name, are displayed to be selected. This enables a user to smoothly take over the previous meeting or class that ended halfway by selecting the displayed first shared folder to read out the stored data file of such as the drawing image. Further, it is possible to ensure security by the first private folder. For example, the user C (Kurt), who is allowed to access a folder of the "Kurtfolder", is also allowed to access a folder of the "Sharefolder 2", although not allowed to access a folder of the "Sharefolder 1".

Further, according to the present embodiment, in the case where the user D (Yamashita) is authorized through the authorization process, the "Yamashitafolder", which is an example of a second private folder name, the "Sharefolder1", which is an example of the first shared folder, and the "Sharefolder2", which is an example of a second shared folder name, are displayed to be selected. Thus, the user D, who is allowed to access a folder of the "Yamashitafolder", is also allowed to access both of a folder of the "Sharefolder1" and a folder of the "Sharefolder2". Thus, when the user D (Yamashita) is a boss or a manager of the user A (Kato), the user B (Jim) and the user C (Kurt), although the user D (Yamashita) is not able to each of the private folders of the subordinates, e.g. the users A, B and C, the user D is able to access each of the shared folders.

Further, in the case where, before finishing a meeting or a class, the user A stores file data of the drawing image, etc., in the external shared terminal of the file management server 8, for example, instead of the shared folder in the electronic whiteboard 2x, the user A (Kato) or the user B (Jim) is able to read out the file data stored in the file management server 8 to take over the meeting or class using the electronic whiteboard 2y located at the site different from where the electronic whiteboard 2x is located.

A "first terminal" is, for example, a privately-owned terminal of the user A. A "second terminal" is, for example, a privately-owned terminal of the user D. "First terminal identification information" is, for example, the terminal ID "aaa" identifying the privately-owned terminal of the user A. "Second terminal identification information" is, for example, the terminal ID "ccc" identifying the privately-owned terminal of the user C.

"First user identification information" is, for example, the user ID "10001" identifying the user A. "Second user identification information" is, for example, the user ID "10003" identifying the user C.

A "first private folder name" is, for example, a name of the user A's private folder. A "second private folder name" is, for example, a name of the user C's private folder.

A "first shared folder name" is, for example, the folder name "Sharefolder1" of an external shared folder accessible by the users A, B, and D. A "second shared folder name" is, for example, the folder name "Sharefolder2" of an external shared folder accessible by the users C and D.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Although in the above embodiment, a description is given of the process of storing electronic file data in a case in which a shared terminal is the electronic whiteboard 2x, the shared terminal may be any suitable device other than the electronic whiteboard 2x. For example, the shared terminal may be a whiteboard provided with a movable scanner that scans a drawing drawn, for example, with a marker pen. In this case, the file data of the drawing image scanned by the movable scanner may be stored in any desired memory such as the USB memory 2600, or a storage area of any server such as in a shared folder or a private folder.

For example, the above described embodiment is also applicable to a projector that projects an image based on image data, and a videoconference terminal for transmitting and receiving image data and voice data to and from a plurality of terminals. That is, the above described embodiment is applicable to various kinds of devices that are capable of receiving input of at least one of voices or handwritten characters and that are used for a conference.

In case the projector is used to input handwritten characters, the projector may be input with drawings made by a user on a screen projected by the projector, using an electronic pen or a user's finger, for example. Further, the user is able to write on an image that is projected with the projector, such as an image of presentation material.

Similarly, in case the videoconference terminal is used to input handwritten characters, the videoconference terminal may be input with drawings made by a user on a screen, which may be displayed or projected. For example, any writing made by the user, for example, on the electronic whiteboard or any material (such as paper or wall) may be captured using a camera of the videoconference terminal. Further, the videoconference terminal is able to capture, using a microphone, voices of participants.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A shared terminal (2) being an electronic whiteboard for displaying an image to a plurality of users on a display (220), the shared terminal (2) comprising:
obtaining means (28, 201, 219, 219a) for obtaining, from an IC card (3) or a smartphone (4) of a first user, first terminal identification information for identifying the IC card (3) or the smartphone (4);
transmitting means (21, 201, 205) for transmitting the first terminal identification information to a terminal management server (5), the terminal management server (5) storing, for each of the plurality of users, information relating to a terminal (3, 4) of the user; and
receiving means (21, 201, 205) for receiving first user identification information for identifying the first user, the first user identification information being transmitted from the terminal management server (5) based on transmission of the first terminal identification information by the transmitting means (21, 201, 205), wherein
the transmitting means (21, 201, 205) is further configured to transmit the first user identification information to a file management server (8), the file management server (8) storing information relating to one or more folders accessible by one or more users of the plurality of users,
the receiving means (21, 201, 205) is further configured to receive a first private folder name of a first private folder accessible only by the first user and a first shared folder name of a first shared folder accessible by the first user and at least one other user, the first private folder name and the first shared folder name being transmitted from the file management server (8) based on transmission of the first user identification information by the transmitting means (21, 201, 205), and
the shared terminal (2) further comprises display control means (24, 213) for controlling the display (220) to display the first private folder name and the first shared folder name to enable a selection of a destination to which electronic file data is to be stored.

2. The shared terminal (2) of claim 1, wherein
the terminal management server (5) is further configured to store, for each of the plurality of users, terminal identification information identifying a terminal (3, 4) of the user in association with user identification information for identifying the user,
the first user identification information is transmitted from the terminal management server, based on a successful authentication result, the successful authentication result being obtained based on a determination that the first terminal identification is stored in the terminal management server (5), and
the file management server (8) is further configured to store, for each of the plurality of users, the user identification information, in association with a private folder name of the private folder accessible by the user and a shared folder name of the shared folder accessible by the user and at least one other user.

3. The shared terminal (2) of claim 2, further comprising:
accepting means (22, 201, 214, 216) for accepting a selection of one of the first private folder name and the first shared folder name corresponding to an electronic folder as the destination to which the electronic file folder is to be stored,
wherein the transmitting means (21, 201, 205) is further configured to transmit the electronic file data and one of the first private folder name and the first shared folder name for which selection is accepted by the accepting means (22, 201, 214, 216), to the file management server (8).

4. The shared terminal (2) of claim 2 or 3, wherein
the file management server (8) is further configured to store second user identification information identifying a second user in association with a second private folder name of a second private folder accessible only by the second user, the first shared folder name, and a second shared folder name of a second shared folder that is not accessible by the first user but accessible by the second user,
the obtaining means (28, 201, 219, 219a) is further configured to obtain, from a second terminal (3,4) of the second user, second terminal identification information for identifying the second terminal (3,4),
the transmitting means (21, 201, 205) is further configured to transmit the second terminal identification information to the terminal management server (5),
the receiving means (21, 201, 205) is further configured to receive the second user identification information, the second user identification information being transmitted from the terminal management server (5) based on a successful authentication result, the successful authentication result being obtained based on a determination that the second terminal identification information is stored in the terminal management server (5),
the transmitting means (21, 201, 205) is further configured to transmit the second user identification information to the file management server (8),
the receiving means (21, 201, 205) is further configured to receive the second private folder name, the first shared folder name, and the second shared folder name, each being associated with the second user identification information and transmitted from the file management server (8) based on transmission of the second user identification information by the transmitting means (21, 201, 205), and
the display control means (24, 213) is further configured to control the display (220) to display the second private folder name, the first shared folder name, and the second shared folder name to enable a selection of a destination to which electronic file data is to be stored.

5. The shared terminal (2) of claim 4, wherein
the accepting means (22, 201, 214, 216) is further configured to accept a selection of one of the second private folder name, the first shared folder name, and the second shared folder name corresponding to an electronic folder as the destination to which the electronic file data is to be stored, and
the transmitting means (21, 201, 205) is further configured to transmit the electronic file data and one of the second private folder name, the first shared folder name, and the second shared folder name, for which selection is accepted by the accepting means (22, 201, 214, 216), to the file management server.

6. The shared terminal (2) of claim 3, wherein
the display control means (24, 213) is further configured to control the display (220) to display the first private folder name and the first shared folder name to enable a selection of a source from which electronic file data is to be read out,
the accepting means (22, 201, 214, 216) is further configured to accept a selection of one of the first private folder name and the first shared folder name corresponding to an electronic folder as the source from which the electronic file data is to be read out,
the transmitting means (21, 201, 205) is further configured to transmit one of the first private folder name and the first shared folder name for which selection is accepted by the accepting means (22, 201, 214, 216),
the receiving means (21, 201, 205) is further configured to receive, from the file management server (8), one or more file names of the electronic file data stored in the electronic folder corresponding to one of the first private folder name and the first shared folder name transmitted by the transmitting means (21, 201, 205),
the display control means (24, 213) is further configured to control the display (220) to display the one or more file names for selection,
the accepting means (22, 201, 214, 216) is further configured to accept a selection of a desired file name of the one or more file names,
the transmitting means (21, 201, 205) is further configured to transmit the desired file name to the file management server (8),
the receiving means (21, 201, 205) is further configured to receive electronic file data identified by the desired file name from the file management server (8), and
the display control means (24, 213) is further configured to control the display (220) to display an image based on the electronic file data received by the receiving means (21, 201, 205).

7. The shared terminal (2) of claim 5, wherein
the display control means (24, 213) is further configured to control the display (220) to display the second private folder name, the first shared folder name, and the second shared folder name to enable a selection of a source from which electronic file data is to be read out,
the accepting means (22, 201, 214, 216) is further configured to accept a selection of one of the second private folder name, the first shared folder name, and the second shared folder name corresponding to an electronic folder as the source from which the electronic file data is to be read out,
the transmitting means (21, 201, 205) is further configured to transmit one of the second private folder name, the first shared folder name, and the second shared folder name for which selection is accepted by the accepting means (22, 201, 214, 216),
the receiving means (21, 201, 205) is further configured to receive, from the file management server (8), one or more file names of the electronic file data stored in the electronic folder corresponding one of the second private folder name, the first shared folder name, and the second shared folder name transmitted by the transmitting means (21, 201, 205),
the display control means (24, 213) is further configured to control the display (220) to display the one or more file names for selection;
the accepting means (22, 201, 214, 216) is further configured to accept a selection of a desired file name of the one or more file names,
the transmitting means (21, 201, 205) is further configured to transmit the desired file name to file management server (8);
the receiving means (21, 201, 205) is further configured to receive electronic file data identified by the desired file name from the file management server (8), and
the display control means (24, 213) is further configured to control the display (220) to display an image based on the electronic file data received by the receiving means (21, 201, 205).

8. The shared terminal (2) of any one of claims 1 to 7, wherein the electronic file data is stroke data that is editable.

9. A communication system comprising:
a shared terminal (2) of any one of claims 1 to 8;
a terminal management server (5) configured to store, for each of a plurality of users, information relating to a terminal (3, 4) of the user; and
a file management server (8) configured to store information relating to one or more folders accessible by one or more users of the plurality of users.

10. A communication method performed by a shared terminal (2) being an electronic whiteboard for displaying an image to a plurality of users on a display (220), the method comprising:
obtaining (S12), from an IC card (3) or a smartphone (4) of a first user, first terminal identification information for identifying the IC card (3) or the smartphone (4);
transmitting (S13) the first terminal identification information to a terminal management server (5), the terminal management server (5) storing, for each of the plurality of users, information relating to a terminal of the user;
receiving (S15) first user identification information for identifying the first user, the first user identification information being transmitted from the terminal management server (5) based on reception of the first terminal identification information;
transmitting (S17) the first user identification information to a file management server (8), the file management server (8) storing information relating to one or more folders accessible by one or more users of the plurality of users;
receiving (S19) a first private folder name of a first private folder accessible only the first user and a first shared folder name of a first shared folder accessible by the first user and at least one other user, the first private folder name and the first shared folder name being transmitted from the file management server (8) based on reception of the first user identification information; and
controlling the display (220) to display the first private folder name and the first shared folder name to enable a selection of a destination to which electronic file data is to be stored.

11. A carrier means carrying computer readable code for controlling a shared terminal (2) being an electronic whiteboard to perform the method of claim 10.

## Patentansprüche

1. Gemeinsames Endgerät (2), das ein elektronisches Whiteboard ist, zum Anzeigen eines Bilds für eine Vielzahl von Benutzern auf einer Anzeige (220), wobei das gemeinsame Endgerät (2) Folgendes umfasst:
Erhalten eines Mittels (28, 201, 219, 219a) zum Erhalten erster Endgerätidentifikationsinformationen zum Identifizieren der IC-Karte (3) oder des Smartphones (4) von einer IC-Karte (3) oder einem Smartphone (4) eines ersten Benutzers;
Übertragungsmittel (21, 201, 205) zum Übertragen der ersten Endgerätidentifikationsinformationen an einen Endgerätverwaltungsserver (5), wobei der Endgerätverwaltungsserver (5) Informationen bezüglich eines Endgeräts (3, 4) des Benutzers für jeden der Vielzahl von Benutzern speichert; und
Empfangsmittel (21, 201, 205) zum Empfangen erster Benutzeridentifikationsinformationen zum Identifizieren des ersten Benutzers, wobei die ersten Benutzeridentifikationsinformationen von dem Endgerätverwaltungsserver (5) auf Grundlage einer Übertragung der ersten Endgerätidentifikationsinformationen durch das Übertragungsmittel (21, 201, 205) übertragen werden, wobei
das Übertragungsmittel (21, 201, 205) ferner konfiguriert ist, die ersten Benutzeridentifikationsinformationen an einen Dateiverwaltungsserver (8) zu übertragen, wobei der Dateiverwaltungsserver (8) Informationen bezüglich eines oder mehrerer Ordner, auf die ein oder mehrere Benutzer der Vielzahl von Benutzern zugreifen können, speichert,
das Empfangsmittel (21, 201, 205) ferner konfiguriert ist, einen ersten persönlichen Ordnernamen eines ersten persönlichen Ordners, auf den nur der erste Benutzer zugreifen kann, und einen ersten gemeinsamen Ordnernamen eines ersten gemeinsamen Ordners, auf den der erste Benutzer und mindestens ein anderer Benutzer zugreifen kann, zu empfangen, wobei der erste persönliche Ordnername und der erste gemeinsame Ordnername von dem Dateiverwaltungsserver (8) auf Grundlage einer Übertragung der ersten Benutzeridentifikationsinformationen durch das Übertragungsmittel (21, 201, 205) übertragen werden, und
das gemeinsame Endgerät (2) ferner ein Anzeigesteuermittel (24, 213) zum Steuern der Anzeige (220) umfasst, um den ersten persönlichen Ordnernamen und den ersten gemeinsamen Ordnernamen anzuzeigen, um eine Auswahl eines Ziels, an dem elektronische Dateidaten gespeichert werden sollen, zu aktivieren.

2. Gemeinsames Endgerät (2) nach Anspruch 1, wobei
der Endgerätverwaltungsserver (5) ferner konfiguriert ist, Endgerätidentifikationsinformationen, die ein Endgerät (3, 4) des Benutzers identifizieren, in Verbindung mit Benutzeridentifikationsinformationen zum Identifizieren des Benutzers für jeden der Vielzahl von Benutzern zu speichern,
die ersten Benutzeridentifikationsinformationen von dem Endgerätverwaltungsserver auf Grundlage eines erfolgreichen Authentifizierungsergebnisses übertragen werden, wobei das erfolgreiche Authentifizierungsergebnis auf Grundlage einer Bestimmung, dass die erste Endgerätidentifikation in dem Endgerätverwaltungsserver (5) gespeichert ist, erhalten wird, und
der Dateiverwaltungsserver (8) ferner konfiguriert ist, die Benutzeridentifikationsinformationen in Verbindung mit einem persönlichen Ordnernamen des persönlichen Ordners, auf den der Benutzer zugreifen kann, und einem gemeinsamen Ordnernamen des gemeinsamen Ordners, auf den der Benutzer und mindestens ein anderer Benutzer zugreifen kann, für jeden der Vielzahl von Benutzern zu speichern.

3. Gemeinsames Endgerät (2) nach Anspruch 2, ferner umfassend:
Annahmemittel (22, 201, 214, 216) zum Annehmen einer Auswahl eines von dem ersten persönlichen Ordnernamen und dem ersten gemeinsamen Ordnernamen, der einem elektronischen Ordner entspricht, als das Ziel, an dem der elektronische Dateiordner gespeichert werden soll,
wobei das Übertragungsmittel (21, 201, 205) ferner konfiguriert ist, die elektronischen Dateidaten und einen von dem ersten persönlichen Ordnernamen und dem ersten gemeinsamen Ordnernamen, für den eine Auswahl durch das Annahmemittel (22, 201, 214, 216) angenommen ist, an den Dateiverwaltungsserver (8) zu übertragen.

4. Gemeinsames Endgerät (2) nach Anspruch 2 oder 3, wobei
der Dateiverwaltungsserver (8) ferner konfiguriert ist, zweite Benutzeridentifikationsinformationen, die einen zweiten Benutzer identifizieren, in Verbindung mit einem zweiten persönlichen Ordnernamen eines zweiten persönlichen Ordners, auf den nur der zweite Benutzer zugreifen kann, dem ersten gemeinsamen Ordnernamen und einem zweiten gemeinsamen Ordnernamen eines zweiten gemeinsamen Ordners, auf den der erste Benutzer nicht zugreifen kann, aber auf den der zweite Benutzer zugreifen kann, zu speichern,
das Erhaltungsmittel (28, 201, 219, 219a) ferner konfiguriert ist, von einem zweiten Endgerät (3, 4) des zweiten Benutzers zweite Endgerätidentifikationsinformationen zum Identifizieren des zweiten Endgeräts (3, 4) zu erhalten,
das Übertragungsmittel (21, 201, 205) ferner konfiguriert ist, die zweiten Endgerätidentifikationsinformationen an den Endgerätverwaltungsserver (5) zu übertragen,
das Empfangsmittel (21, 201, 205) ferner konfiguriert ist, die zweiten Benutzeridentifikationsinformationen zu empfangen, wobei die zweiten Benutzeridentifikationsinformationen von dem Endgerätverwaltungsserver (5) auf Grundlage eines erfolgreichen Authentifizierungsergebnisses übertragen werden, wobei das erfolgreiche Authentifizierungsergebnis auf Grundlage einer Bestimmung, dass die zweiten Endgerätidentifikationsinformationen in dem Endgerätverwaltungsserver (5) gespeichert sind, erhalten wird,
das Übertragungsmittel (21, 201, 205) ferner konfiguriert ist, die zweiten Benutzeridentifikationsinformationen an den Dateiverwaltungsserver (8) zu übertragen,
das Empfangsmittel (21, 201, 205) ferner konfiguriert ist, den zweiten persönlichen Ordnernamen, den ersten gemeinsamen Ordnernamen und den zweiten gemeinsamen Ordnernamen zu empfangen, wobei jeder mit den zweiten Benutzeridentifikationsinformationen verbunden ist und von dem Dateiverwaltungsserver (8) auf Grundlage einer Übertragung der zweiten Benutzeridentifikationsinformationen durch das Übertragungsmittel (21, 201, 205) übertragen wird, und
das Anzeigesteuermittel (24, 213) ferner konfiguriert ist, die Anzeige (220) zu steuern, um den zweiten persönlichen Ordnernamen, den ersten gemeinsamen Ordnernamen und den zweiten gemeinsamen Ordnernamen anzuzeigen, um eine Auswahl eines Ziels, an dem elektronische Dateidaten gespeichert werden sollen, zu aktivieren.

5. Gemeinsames Endgerät (2) nach Anspruch 4, wobei
das Annahmemittel (22, 201, 214, 216) ferner konfiguriert ist, eine Auswahl eines von dem zweiten persönlichen Ordnernamen, dem ersten gemeinsamen Ordnernamen und dem zweiten gemeinsamen Ordnernamen, der einem elektronischen Ordner entspricht, als das Ziel, an dem die elektronischen Dateidaten gespeichert werden sollen, anzunehmen, und
das Übertragungsmittel (21, 201, 205) ferner konfiguriert ist, die elektronischen Dateidaten und einen von dem zweiten persönlichen Ordnernamen, dem ersten gemeinsamen Ordnernamen und dem zweiten gemeinsamen Ordnernamen, für den eine Auswahl durch das Annahmemittel (22, 201, 214, 216) angenommen ist, an den Dateiverwaltungsserver zu übertragen.

6. Gemeinsames Endgerät (2) nach Anspruch 3, wobei
das Anzeigesteuermittel (24, 213) ferner konfiguriert ist, die Anzeige (220) zu steuern, um den ersten persönlichen Ordnernamen und den ersten gemeinsamen Ordnernamen anzuzeigen, um eine Auswahl einer Quelle, aus der elektronische Dateidaten ausgelesen werden sollen, zu aktivieren,
das Annahmemittel (22, 201, 214, 216) ferner konfiguriert ist, eine Auswahl eines von dem ersten persönlichen Ordnernamen und dem ersten gemeinsamen Ordnernamen, der einem elektronischen Ordner entspricht, als die Quelle, aus der die elektronischen Dateidaten ausgelesen werden sollen, anzunehmen,
das Übertragungsmittel (21, 201, 205) ferner konfiguriert ist, einen von dem ersten persönlichen Ordnernamen und dem ersten gemeinsamen Ordnernamen, für den eine Auswahl durch das Annahmemittel (22, 201, 214, 216) angenommen ist, zu übertragen,
das Empfangsmittel (21, 201, 205) ferner konfiguriert ist, einen oder mehrere Dateinamen der elektronischen Dateidaten, die in dem elektronischen Ordner gespeichert sind, der einem von dem ersten persönlichen Ordnernamen und dem ersten gemeinsamen Ordnernamen entspricht, der durch das Übertragungsmittel (21, 201, 205) übertragen ist, von dem Dateiverwaltungsserver (8) zu empfangen,
das Anzeigesteuermittel (24, 213) ferner konfiguriert ist, die Anzeige (220) zu steuern, um den einen oder die mehreren Dateinamen zur Auswahl anzuzeigen,
das Annahmemittel (22, 201, 214, 216) ferner konfiguriert ist, eine Auswahl eines gewünschten Dateinamens des einen oder der mehreren Dateinamen anzunehmen,
das Übertragungsmittel (21, 201, 205) ferner konfiguriert ist, den gewünschten Dateinamen an den Dateiverwaltungsserver (8) zu übertragen,
das Empfangsmittel (21, 201, 205) ferner konfiguriert ist, elektronische Dateidaten, die durch den gewünschten Dateinamen identifiziert sind, von dem Dateiverwaltungsserver (8) zu empfangen, und
das Anzeigesteuermittel (24, 213) ferner konfiguriert ist, die Anzeige (220) zu steuern, um ein Bild auf Grundlage der elektronischen Dateidaten, die durch das Empfangsmittel (21, 201, 205) empfangen werden, anzuzeigen.

7. Gemeinsames Endgerät (2) nach Anspruch 5, wobei
das Anzeigesteuermittel (24, 213) ferner konfiguriert ist, die Anzeige (220) zu steuern, um den zweiten persönlichen Ordnernamen, den ersten gemeinsamen Ordnernamen und den zweiten gemeinsamen Ordnernamen anzuzeigen, um eine Auswahl einer Quelle, aus der elektronische Dateidaten ausgelesen werden sollen, zu aktivieren,
das Annahmemittel (22, 201, 214, 216) ferner konfiguriert ist, eine Auswahl eines von dem zweiten persönlichen Ordnernamen, dem ersten gemeinsamen Ordnernamen und dem zweiten gemeinsamen Ordnernamen, der einem elektronischen Ordner entspricht, als die Quelle, aus der die elektronischen Dateidaten ausgelesen werden sollen, anzunehmen,
das Übertragungsmittel (21, 201, 205) ferner konfiguriert ist, einen von dem zweiten persönlichen Ordnernamen, dem ersten gemeinsamen Ordnernamen und dem zweiten gemeinsamen Ordnernamen, für den eine Auswahl durch das Annahmemittel (22, 201, 214, 216) angenommen ist, zu übertragen,
das Empfangsmittel (21, 201, 205) ferner konfiguriert ist, einen oder mehrere Dateinamen der elektronischen Dateidaten, die in dem elektronischen Ordner gespeichert sind, der einem von dem zweiten persönlichen Ordnernamen, dem ersten gemeinsamen Ordnernamen und dem zweiten gemeinsamen Ordnernamen entspricht, der durch das Übertragungsmittel (21, 201, 205) übertragen wird, von dem Dateiverwaltungsserver (8) zu empfangen,
das Anzeigesteuermittel (24, 213) ferner konfiguriert ist, die Anzeige (220) zu steuern, um den einen oder die mehreren Dateinamen zur Auswahl anzuzeigen;
das Annahmemittel (22, 201, 214, 216) ferner konfiguriert ist, eine Auswahl eines gewünschten Dateinamens des einen oder der mehreren Dateinamen anzunehmen,
das Übertragungsmittel (21, 201, 205) ferner konfiguriert ist, den gewünschten Dateinamen an Dateiverwaltungsserver (8) zu übertragen;
das Empfangsmittel (21, 201, 205) ferner konfiguriert ist, elektronische Dateidaten, die durch den gewünschten Dateinamen identifiziert sind, von dem Dateiverwaltungsserver (8) zu empfangen, und
das Anzeigesteuermittel (24, 213) ferner konfiguriert ist, die Anzeige (220) zu steuern, um ein Bild auf Grundlage der elektronischen Dateidaten, die durch das Empfangsmittel (21, 201, 205) empfangen werden, anzuzeigen.

8. Gemeinsames Endgerät (2) nach einem der Ansprüche 1 bis 7, wobei die elektronischen Dateidaten Strichdaten, die bearbeitbar sind, sind.

9. Kommunikationssystem, umfassend:
ein gemeinsames Endgerät (2) nach einem der Ansprüche 1 bis 8;
einen Endgerätverwaltungsserver (5), der konfiguriert ist, Informationen bezüglich eines Benutzergeräts (3, 4) des Benutzers für jeden einer Vielzahl von Benutzern zu speichern; und
einen Dateiverwaltungsserver (8), der konfiguriert ist, Informationen bezüglich eines oder mehrerer Ordner, auf die ein oder mehrere Benutzer der Vielzahl von Benutzern zugreifen können, zu speichern.

10. Kommunikationsverfahren, das durch ein gemeinsames Endgerät (2), das ein elektronisches Whiteboard ist, zum Anzeigen eines Bilds für eine Vielzahl von Benutzern auf einer Anzeige (220) durchgeführt wird, wobei das Verfahren Folgendes umfasst:
Erhalten (S12) von ersten Endgerätidentifikationsinformationen zum Identifizieren der IC-Karte (3) oder des Smartphones (4) von einer IC-Karte (3) oder einem Smartphone (4) eines ersten Benutzers;
Übertragen (S13) der ersten Endgerätidentifikationsinformationen an einen Endgerätverwaltungsserver (5), wobei der Endgerätverwaltungsserver (5) Informationen bezüglich eines Endgeräts des Benutzers für jeden der Vielzahl von Benutzern speichert;
Empfangen (S15) erster Benutzeridentifikationsinformationen zum Identifizieren des ersten Benutzers, wobei die ersten Benutzeridentifikationsinformationen von dem Endgerätverwaltungsserver (5) auf Grundlage eines Empfangs der ersten Endgerätidentifikationsinformationen übertragen werden;
Übertragen (S17) der ersten Benutzeridentifikationsinformationen an einen Dateiverwaltungsserver (8), wobei der Dateiverwaltungsserver (8) Informationen bezüglich eines oder mehrerer Ordner, auf die ein oder mehrere Benutzer der Vielzahl von Benutzern zugreifen können, speichert;
Empfangen (S19) eines ersten persönlichen Ordnernamens eines ersten persönlichen Ordners, auf den nur der erste Benutzer zugreifen kann, und eines ersten gemeinsamen Ordnernamens eines ersten gemeinsamen Ordners, auf den der erste Benutzer und mindestens ein andere Benutzer zugreifen kann, wobei der ersten persönlichen Ordnername und der erste gemeinsame Ordnername von dem Dateiverwaltungsserver (8) auf Grundlage eines Empfangs der ersten Benutzeridentifikationsinformationen übertragen wird; und
Steuern der Anzeige (220), um den ersten persönlichen Ordnernamen und den ersten gemeinsamen Ordnernamen anzuzeigen, um eine Auswahl eines Ziels, an dem elektronische Dateidaten gespeichert werden sollen, zu aktivieren.

11. Trägermittel, das computerlesbaren Code zum Steuern eines gemeinsamen Endgeräts (2), das ein elektronisches Whiteboard ist, zum Durchführen des Verfahrens nach Anspruch 10 trägt.

## Revendications

1. Terminal partagé (2) étant un tableau blanc électronique destiné à afficher une image vers une pluralité d'utilisateurs sur un affichage (220), le terminal partagé (2) comprenant :
des moyens d'obtention (28, 201, 219, 219a) destinés à obtenir, depuis une carte CI (3) ou un smartphone (4) d'un premier utilisateur, des premières informations d'identification de terminal permettant d'identifier la carte CI (3) ou le smartphone (4) ;
des moyens de transmission (21, 201, 205) destinés à transmettre les premières informations d'identification de terminal à un serveur de gestion de terminal (5), le serveur de gestion de terminal (5) stockant, pour chacun de la pluralité d'utilisateurs, des informations liées à un terminal (3, 4) de l'utilisateur ; et
des moyens de réception (21, 201, 205) destinés à recevoir des premières informations d'identification d'utilisateur permettant d'identifier le premier utilisateur, premières informations d'identification d'utilisateur étant transmises depuis le serveur de gestion de terminal (5) en fonction d'une transmission des premières informations d'identification de terminal par le moyen de transmission (21, 201, 205),
les moyens de transmission (21, 201, 205) étant en outre conçus pour transmettre les premières informations d'identification d'utilisateur à un serveur de gestion de fichier (8), le serveur de gestion de fichier (8) stockant des informations liées à au moins un dossier accessible par au moins un utilisateur de la pluralité d'utilisateurs,
les moyens de réception (21, 201, 205) étant en outre conçus pour recevoir un premier nom de dossier privé d'un premier dossier privé accessible seulement par le premier utilisateur et un premier nom de dossier partagé d'un premier dossier partagé accessible par le premier utilisateur et au moins un autre utilisateur, le premier nom de dossier privé et le premier nom de dossier partagé étant transmis depuis le serveur de gestion de fichier (8) en fonction d'une transmission des premières informations d'identification d'utilisateur par les moyens de transmission (21, 201, 205), et
le terminal partagé (2) comprenant en outre des moyens de commande d'affichage (24, 213) destinés à commander l'affichage (220) pour afficher le premier nom de dossier privé et le premier nom de dossier partagé pour permettre une sélection d'une destination vers laquelle des données de fichier électronique doivent être stockées.

2. Terminal partagé (2) selon la revendication 1, dans lequel
le serveur de gestion de terminal (5) est en outre conçu pour stocker, pour chacun de la pluralité d'utilisateurs, des informations d'identification de terminal identifiant un terminal (3, 4) de l'utilisateur en association avec des informations d'identification d'utilisateur permettant d'identifier l'utilisateur,
les premières informations d'identification d'utilisateur sont transmises depuis le serveur de gestion de terminal, en fonction d'un résultat d'authentification réussie, le résultat d'authentification réussie étant obtenu en fonction d'une détermination que la première identification de terminal est stockée dans le serveur de gestion de terminal (5), et
le serveur de gestion de fichier (8) est en outre conçu pour stocker, pour chacun de la pluralité d'utilisateurs, les informations d'identification d'utilisateur, en association avec un nom de dossier privé du dossier privé accessible par l'utilisateur et un nom de dossier partagé du dossier partagé accessible par l'utilisateur et au moins un autre utilisateur.

3. Terminal partagé (2) selon la revendication 2, comprenant en outre :
des moyens d'acceptation (22, 201, 214, 216) permettant d'accepter une sélection du premier nom de dossier privé ou du premier nom de dossier partagé correspondant à un dossier électronique en tant que destination vers laquelle le dossier de fichier électronique doit être stocké,
les moyens de transmission (21, 201, 205) étant en outre conçus pour transmettre les données de fichier électronique et le premier nom de dossier privé ou le premier nom de dossier partagé pour lequel une sélection est acceptée par les moyens d'acceptation (22, 201, 214, 216), vers le serveur de gestion de fichier (8).

4. Terminal partagé (2) selon la revendication 2 ou 3, dans lequel
le serveur de gestion de fichier (8) est en outre conçu pour stocker des deuxièmes informations d'identification d'utilisateur identifiant un deuxième utilisateur en association avec un deuxième nom de dossier privé d'un deuxième dossier privé accessible seulement par le deuxième utilisateur, le premier nom de dossier partagé et un deuxième nom de dossier partagé d'un deuxième dossier partagé qui n'est pas accessible par le premier utilisateur mais accessible par le deuxième utilisateur,
les moyens d'obtention (28, 201, 219, 219a) sont en outre conçus pour obtenir, depuis un deuxième terminal (3, 4) du deuxième utilisateur, des deuxièmes informations d'identification de terminal permettant d'identifier le deuxième terminal (3, 4),
les moyens de transmission (21, 201, 205) sont en outre conçus pour transmettre les deuxièmes informations d'identification de terminal vers le serveur de gestion de terminal (5),
les moyens de réception (21, 201, 205) sont en outre conçus pour recevoir les deuxièmes informations d'identification d'utilisateur, les deuxièmes informations d'identification d'utilisateur étant transmises depuis le serveur de gestion de terminal (5) en fonction d'un résultat d'authentification réussie, le résultat d'authentification réussie étant obtenu en fonction d'une détermination que les deuxièmes informations d'identification de terminal sont stockées dans le serveur de gestion de terminal (5),
les moyens de transmission (21, 201, 205) sont en outre conçus pour transmettre les deuxièmes informations d'identification d'utilisateur au serveur de gestion de fichier (8),
les moyens de réception (21, 201, 205) sont en outre conçus pour recevoir le deuxième nom de dossier privé, le premier nom de dossier partagé et le deuxième nom de dossier partagé, chacun étant associé aux deuxièmes informations d'identification d'utilisateur et transmises depuis le serveur de gestion de fichier (8) en fonction d'une transmission des deuxièmes informations d'identification d'utilisateur par les moyens de transmission (21, 201, 205), et
les moyens de commande d'affichage (24, 213) sont en outre conçus pour commander l'affichage (220) pour afficher le deuxième nom de dossier privé, le premier nom de dossier partagé et le deuxième nom de dossier partagé pour permettre une sélection d'une destination vers laquelle des données de fichier électronique doivent être stockées.

5. Terminal partagé (2) selon la revendication 4, dans lequel
les moyens d'acceptation (22, 201, 214, 216) sont en outre conçues pour accepter une sélection du deuxième nom de dossier privé, du premier nom de dossier partagé ou du deuxième nom de dossier partagé correspondant à un dossier électronique en tant que destination vers laquelle les données de fichier électronique doivent être stockées, et
les moyens de transmission (21, 201, 205) sont en outre conçus pour transmettre les données de fichier électronique et le deuxième nom de dossier privé, le premier nom de dossier partagé ou le deuxième nom de dossier partagé, pour lequel une sélection est acceptée par les moyens d'acceptation (22, 201, 214, 216), vers le serveur de gestion de fichier.

6. Terminal partagé (2) selon la revendication 3, dans lequel
les moyens de commande d'affichage (24, 213) sont en outre conçus pour commander l'affichage (220) pour afficher le premier nom de dossier privé et le premier nom de dossier partagé pour permettre une sélection d'une source depuis laquelle des données de fichier électronique doivent être lues,
les moyens d'acceptation (22, 201, 214, 216) sont en outre conçus pour accepter une sélection du premier nom de dossier privé ou du premier nom de dossier partagé correspondant à un dossier électronique en tant que source depuis laquelle les données de fichier électronique doivent être lues,
les moyens de transmission (21, 201, 205) sont en outre conçus pour transmettre le premier nom de dossier privé ou le premier nom de dossier partagé pour lequel une sélection est acceptée par les moyens d'acceptation (22, 201, 214, 216),
les moyens de réception (21, 201, 205) sont en outre conçus pour recevoir, depuis le serveur de gestion de fichier (8), au moins un nom de fichier des données de fichier électronique stockées dans le dossier électronique correspondant au premier nom de dossier privé ou au premier nom de dossier partagé transmis par les moyens de transmission (21, 201, 205),
les moyens de commande d'affichage (24, 213) sont en outre conçus pour commander l'affichage (220) pour afficher l'au moins un nom de fichier pour une sélection,
les moyens d'acceptation (22, 201, 214, 216) sont en outre conçus pour accepter une sélection d'un nom de fichier désiré de l'au moins un nom de fichier,
les moyens de transmission (21, 201, 205) sont en outre conçus pour transmettre le nom de fichier désiré au serveur de gestion de fichier (8),
les moyens de réception (21, 201, 205) sont en outre conçus pour recevoir des données de fichier électronique identifiées par le nom de fichier désiré depuis le serveur de gestion de fichier (8), et
les moyens de commande d'affichage (24, 213) sont en outre conçus pour commander l'affichage (220) pour afficher une image en fonction des données de fichier électronique reçues par les moyens de réception (21, 201, 205).

7. Terminal partagé (2) selon la revendication 5, dans lequel
les moyens de commande d'affichage (24, 213) sont en outre conçus pour commander l'affichage (220) pour afficher le deuxième nom de dossier privé, le premier nom de dossier partagé et le deuxième nom de dossier partagé pour permettre une sélection d'une source depuis laquelle des données de fichier électronique doivent être lues,
les moyens d'acceptation (22, 201, 214, 216) sont en outre conçus pour accepter une sélection du deuxième nom de dossier privé, du premier nom de dossier partagé ou du deuxième nom de dossier partagé correspondant à un dossier électronique en tant que source depuis laquelle les données de fichier électronique doivent être lues,
les moyens de transmission (21, 201, 205) sont en outre conçus pour transmettre le deuxième nom de dossier privé, le premier nom de dossier partagé ou le deuxième nom de dossier partagé pour lequel une sélection est acceptée par les moyens d'acceptation (22, 201, 214, 216),
les moyens de réception (21, 201, 205) sont en outre conçus pour recevoir, depuis le serveur de gestion de fichier (8), au moins un nom de fichier des données de fichier électronique stockées dans le dossier électronique correspondant au deuxième nom de dossier privé, au premier nom de dossier partagé ou au deuxième nom de dossier partagé transmis par les moyens de transmission (21, 201, 205),
les moyens de commande d'affichage (24, 213) sont en outre conçus pour commander l'affichage (220) pour afficher l'au moins un nom de fichier pour une sélection ;
les moyens d'acceptation (22, 201, 214, 216) sont en outre conçus pour accepter une sélection d'un nom de fichier désiré de l'au moins un nom de fichier,
les moyens de transmission (21, 201, 205) sont en outre conçus pour transmettre le nom de fichier désiré au serveur de gestion de fichier (8) ;
les moyens de réception (21, 201, 205) sont en outre conçus pour recevoir des données de fichier électronique identifiées par le nom de fichier désiré depuis le serveur de gestion de fichier (8), et
les moyens de commande d'affichage (24, 213) sont en outre conçus pour commander l'affichage (220) pour afficher une image en fonction des données de fichier électronique reçues par les moyens de réception (21, 201, 205).

8. Terminal partagé (2) selon l'une quelconque des revendications 1 à 7, dans lequel les données de fichier électronique sont des données de frappe qui sont modifiables.

9. Système de communication comprenant :
un terminal partagé (2) selon l'une quelconque des revendications 1 à 8 ;
un serveur de gestion de terminal (5) conçu pour stocker, pour chacun d'une pluralité d'utilisateurs, des informations liées à un terminal (3, 4) de l'utilisateur ; et
un serveur de gestion de fichier (8) conçu pour stocker des informations liées à au moins un dossier accessible par au moins un utilisateur de la pluralité d'utilisateurs.

10. Procédé de communication effectué par un terminal partagé (2) étant un tableau blanc électronique destiné à afficher une image vers une pluralité d'utilisateurs sur un affichage (220), le procédé comprenant :
l'obtention (S12), depuis une carte CI (3) ou un smartphone (4) d'un premier utilisateur, des premières informations d'identification de terminal permettant d'identifier la carte CI (3) ou le smartphone (4) ;
la transmission (S13) des premières informations d'identification de terminal à un serveur de gestion de terminal (5), le serveur de gestion de terminal (5) stockant, pour chacun de la pluralité d'utilisateurs, des informations liées à un terminal de l'utilisateur ;
la réception (S15) de premières informations d'identification d'utilisateur permettant d'identifier le premier utilisateur, les premières informations d'identification d'utilisateur étant transmises depuis le serveur de gestion de terminal (5) en fonction d'une réception des premières informations d'identification de terminal ;
la transmission (S17) des premières informations d'identification d'utilisateur à un serveur de gestion de fichier (8), le serveur de gestion de fichier (8) stockant des informations liées à au moins un dossier accessible par au moins un utilisateur de la pluralité d'utilisateurs ;
la réception (S 19) d'un premier nom de dossier privé d'un premier dossier privé accessible seulement par le premier utilisateur et un premier nom de dossier partagé d'un premier dossier partagé accessible par le premier utilisateur et au moins un autre utilisateur, le premier nom de dossier privé et le premier nom de dossier partagé étant transmis depuis le serveur de gestion de fichier (8) en fonction de la réception des premières informations d'identification d'utilisateur ; et
une commande de l'affichage (220) pour afficher le premier nom de dossier privé et le premier nom de dossier partagé pour permettre une sélection d'une destination vers laquelle des données de fichier électronique doivent être stockées.

11. Moyen de support contenant un code lisible par ordinateur destiné à commander un terminal partagé (2) étant un tableau blanc électronique pour effectuer le procédé selon la revendication 10.
